# EUROPEAN PATENT SPECIFICATION

(11) **EP 3 061 795 B1**
(45) Date of publication and mention of the grant of the patent: **24.04.2019**
(21) Application number: 16155586.7
(22) Date of filing: 12.02.2016
(51) Int. Cl.: C09D 11/101, C09D 11/107

(54) **ACTIVE-ENERGY-RAY-CURABLE COMPOSITION, ACTIVE-ENERGY-RAY-CURABLE INK, COMPOSITION STORED CONTAINER, TWO-DIMENSIONAL OR THREE-DIMENSIONAL IMAGE FORMING APPARATUS, METHOD FOR FORMING TWO-DIMENSIONAL OR THREE-DIMENSIONAL IMAGE, CURED MATERIAL, DECORATIVE BODY, AND ACTIVE ENERGY RAY POLYMERIZABLE COMPOUND**
DURCH EINEN AKTIVEN ENERGIESTRAHL HÄRTBARE ZUSAMMENSETZUNG, DURCH EINEN AKTIVEN ENERGIESTRAHL HÄRTBARE TINTE, ZUSAMMENSETZUNG GELAGERT IN CONTAINER, ZWEIDIMENSIONALES ODER DREIDIMENSIONALES BILDFORMUNGSGERÄT, METHODE ZUM BILDEN EINES ZWEIDIMENSIONALEN ODER DREIDIMENSIONALEN BILDES, GEHÄRTETES MATERIAL, ZIERGEGENSTAND UND DURCH AKTIVEN ENERGIESTRAHL HÄRTBARER STOFF
COMPOSITION DURCISSABLE PAR RAYONNEMENT, ENCRE DURCISSABLE PAR RAYONNEMENT, COMPOSITION DANS SON RÉCIPIENT, APPAREIL FORMANT DES IMAGES À DEUX OU TROIS DIMENSIONS, MÉTHODE POUR FORMER DES IMAGES À DEUX OU TROIS DIMENSIONS, MATÉRIAU DURCI, ENTITÉ DÉCORATIVE, COMPOSÉ DURCISSABLE PAR RAYONNEMENT

(30) Priority: 24.02.2015 JP 2015033950; 21.12.2015 JP 2015248685
(43) Date of publication of application: 31.08.2016
(73) Proprietor: Ricoh Company, Ltd., Tokyo 143-8555 (JP)
(72) Inventor: MORITA, Mitsunobu, Ohta-ku, Tokyo 143-8555 (JP); NOGUCHI, Soh, Ohta-ku, Tokyo 143-8555 (JP)
(74) Representative: Lamb, Martin John Carstairs

(56) References cited:
- EP-A1- 1 253 134
- JP-A- 2004 347 859
- JP-A- 2005 179 236
- JP-A- 2006 030 851
- JP-A- 2012 193 292
- US-A1- 2006 009 589

## Description

### BACKGROUND OF THE INVENTION

### Field of the Invention

The present disclosure relates to active-energy-ray-curable compositions, active-energy-ray-curable inks, composition stored containers, two-dimensional or three-dimensional image forming apparatuses, methods for forming two-dimensional or three-dimensional image, cured materials, decorative bodies, and active energy ray polymerizable compounds.

### Description of the Related Art

An inkjet recording method is excellent in high consumption efficiency of inks and saving resources, which can result in reduction of ink costs per a recording unit.

However, when the inkjet recording method is used to form an image with an ink on an absorbable recording medium such as plain paper, problems may be caused such that bleeding of printing dots is easy to cause, and that plural sheets of paper cannot be put on top of one another immediately after printing images, due to poor drying ability.

Therefore, there is a need for an active-energy-ray-curable ink jet recording method that can prevent printing dots from bleeding and that is excellent in drying ability by irradiating an ink with active energy rays such as ultraviolet rays to cure the ink.

As ink compositions used for the active-energy-ray-curable ink jet recording method, proposed are, for example, inkjet ink compositions containing a multifunctional (meth) acrylic acid ester or an amide compound that contains a secondary or tertiary hydroxyl group and a hetero atom capable of reacting the hydroxyl group with the hetero atom to form a hydrogen bond in a molecular thereof (see Japanese Unexamined Patent Application Publication No.2012-193292); inkjet ink compositions containing a multifunctional (meth)acrylic acid ester compound that contains a secondary hydroxyl group (see Japanese Unexamined Patent Application Publication No. 2011-195724); and inkjet ink compositions that contain a secondary hydroxyl group-containing aliphatic (meth)acrylic acid ester compound in combination with another nitrogen-containing polymerizable monomer compound in a molecular thereof (see Japanese Unexamined Patent Application Publication No. 2009-67926).

### SUMMARY OF THE INVENTION

An object of the present disclosure is to provide an active-energy-ray-curable composition that has a little odor, and that is excellent in active energy ray polymerizing ability and active energy ray curing ability.

As means for solving the above problems, an active-energy-ray-curable composition of the present disclosure contains a (meth)acrylic acid ester compound containing a tertiary hydroxyl group in a molecule of the (meth)acrylic acid ester compound and represented by General Formula (1) below. 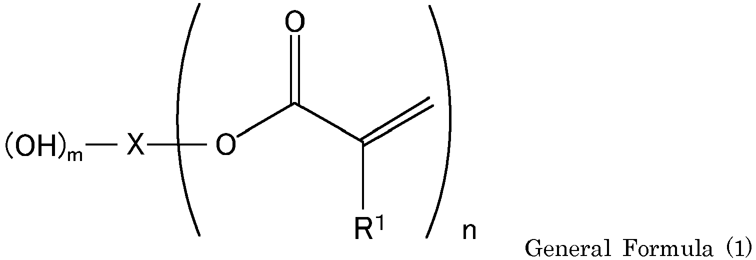 (In the General Formula (1), OH represents a tertiary hydroxyl group, m represents an integer of a range of from 1 through 2, n is 2, R¹ represents a hydrogen atom or a methyl group, and X represents a group formed of an aliphatic hydrocarbon containing from 4 through 10 carbon atoms or a group formed of an aliphatic cyclic hydrocarbon containing from 4 through 10 carbon atoms.)

According to the present disclosure, an active-energy-ray-curable composition that has a little odor, and that is excellent in active energy ray polymerizing ability and active energy ray curing ability can be provided.

### BRIEF DESCRIPTION OF THE DRAWINGS

FIG. 1 is a schematic view of an example of an image forming apparatus of the present disclosure;
FIG. 2 is a schematic view of an example of another image forming apparatus of the present disclosure;
FIG. 3A is a schematic view of an example of still another image forming apparatus of the present disclosure;
FIG. 3B is a schematic view of an example of still another image forming apparatus of the present disclosure;
FIG. 3C is a schematic view of an example of still another image forming apparatus of the present disclosure; and
FIG. 3D is a schematic view of an example of still another image forming apparatus of the present disclosure.

### DETAILED DESCRIPTION OF THE INVENTION

An active-energy-ray-curable composition of the present disclosure contains a (meth)acrylic acid ester compound containing a tertiary hydroxyl group in a molecule of the (meth)acrylic acid ester compound and represented by General Formula (1) below, and further contains other components if necessary. 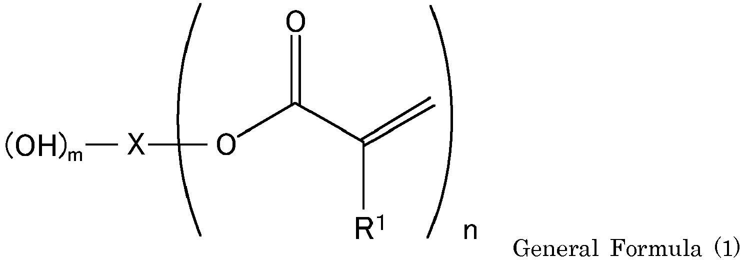 (In the General Formula (1), OH represents a tertiary hydroxyl group, m represents an integer of a range of from 1 through 2, n is 2, R¹ represents a hydrogen atom or a methyl group, and X represents a group formed of an aliphatic hydrocarbon containing from 4 through 10 carbon atoms or a group formed of an aliphatic cyclic hydrocarbon containing from 4 through 10 carbon atoms.)

The present disclosure is conducted based on the fact that ink compositions used for the conventional active-energy-ray-curable ink jet recording methods have odor specific to (meth)acrylic acid ester compounds, which is problematic in terms of labor environment such as occurrence of uncomfortable feeling due to the odor, and the fact that there is a need for improving active energy ray polymerizing ability and active energy ray curing ability of the ink composition.

Moreover, an active energy ray polymerizable compound of the present disclosure contains a (meth)acrylic acid ester compound containing a tertiary hydroxyl group in a molecule of the (meth)acrylic acid ester compound and represented by the General Formula (1).

### (Active Energy Ray Polymerizable Compound)

An active energy ray polymerizable compound of the present disclosure is a (meth)acrylic acid ester compound containing a tertiary hydroxyl group in a molecule of the (meth)acrylic acid ester compound and represented by General Formula (1) below. 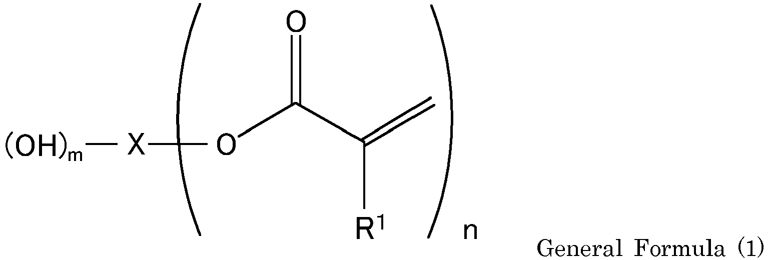 (In the General Formula (1), OH represents a tertiary hydroxyl group, m represents an integer of a range of from 1 through 2, n is 2, R¹ represents a hydrogen atom or a methyl group, and X represents a group formed of an aliphatic hydrocarbon containing from 4 through 10 carbon atoms or a group formed of an aliphatic cyclic hydrocarbon containing from 4 through 10 carbon atoms.)

### <(Meth)acrylic Acid Ester Compound>

The (meth)acrylic acid ester compound is represented by the General Formula (1).

In the General Formula (1), OH represents a tertiary hydroxyl group.

In the General Formula (1), m represents an integer of a range of from 1 through 2, but preferably represents 1, and n is 2.

In the General Formula (1), R¹ represents a hydrogen atom or a methyl group, preferably represents a hydrogen atom.

X in the General Formula (1) represents a group formed of an aliphatic hydrocarbon containing from 4 through 10 carbon atoms or a group formed of an aliphatic cyclic hydrocarbon containing from 4 through 10 carbon atoms. The number of carbon atoms is 10 or less, the synthesized (meth)acrylic acid ester compound represented by the General Formula (1) can be prevent from having high viscosity and changing into a solid state.

Moreover, the aliphatic hydrocarbon and the aliphatic cyclic hydrocarbon may be saturated or unsaturated, and may be bound to an oxygen atom, a nitrogen atom, a sulfur atom, and a chlorine atom in a carbon chain thereof.

The (meth)acrylic acid ester compound represented by the General Formula (1) has two (meth)acrylic acid ester structures as a polymerizable functional group, and has one or two tertiary hydroxyl group (s). Generally, a multifunctional monomer containing a plurality of (meth)acrylic acid ester structures as a polymerizable functional group in a molecular thereof forms cross-linking structures between molecules of the functional monomer through polymerization reaction, and thus tends to be improved in curing ability compared to a monofunctional monomer. Meanwhile, the monofunctional monomer compound containing only one (meth)acrylic acid ester as a polymerizable functional group cannot form a cross-linking structure through polymerization process, and thus tend to be deteriorated in curing ability compared to the multifunctional monomer.

The (meth)acrylic acid ester compound represented by the General Formula (1) contains a polar structure having high hydrogen bonding ability in a molecule of the monomer, distance between the monomers of the (meth)acrylic acid ester compound can be close through intermolecular interaction. Thus, polymerization reaction of the (meth)acrylic acid ester compound is allowed to proceed by an active energy ray with ease, which can result in improvement of active energy ray curing ability. Moreover, the monomer molecule of the (meth)acrylic acid ester compound contains a cyclic structure or a branched structure to improve curing ability. This reason is believed that existence of branched structures and cyclic structures in a polymerized product formed by an active energy ray through polymerization reaction may reduce molecular mobility and flexibility of the cured material after polymerization. Note that, "(meth)acrylic acid" of the (meth)acrylic acid ester compound means acrylic acid or methacrylic acid.

A (meth)acrylic acid ester compound represented by the General Formula (1) as an active energy ray polymerizable compound of the present disclosure is a multifunctional monomer containing two (meth)acrylic acid ester structures and one or two tertiary hydroxyl group(s). The active energy ray polymerizable compound of the present disclosure contains the tertiary hydroxyl group, and thus can attain excellence in active energy ray polymerizing ability and active energy ray curing ability, and can attain low odor. That is, the active energy ray polymerizable compound contains a tertiary hydroxyl group, and thus distance between monomers thereof is close through intermolecular interaction of the monomers. Therefore, polymerization reaction of the monomer is easily allowed to proceed by an active energy ray. Existence of the tertiary hydroxyl group means that the compound contains branched structure, and the polymerized compound that contains the tertiary hydroxyl group-containing branched structure may be cured, which results in excellence in active energy ray curing ability. The compound containing a tertiary hydroxyl group is more excellent than the monomer compound containing a primary hydroxyl group and the compound that contains the secondary hydroxyl group-containing branched structure. The tertiary hydroxyl group is sterically formed to cause defect, but the compound contains a hydroxyl group having high polarity. Therefore, the (meth)acrylic acid ester compound is prevented from occurrence of volatilization and occurrence of odor, and thus is excellent in low odor through intermolecular interaction.

Examples of the group formed of an aliphatic hydrocarbon containing from 4 through 10 carbon atoms include a 2-methylbutyl group, a 1-methylpentyl group, a 2-methylpentyl group, a 3-methylpentyl group, a 4-methylpentyl group, a 2-methylhexyl group, a 3-methylhexyl group, a 2-methylheptyl group, a 3-methylheptyl group, a 4-methylheptyl group, a 2,2-dimethyloctyl group, a 2,3-dimethyloctyl group, a 2,4-dimethyloctyl group, a 3,6-dimethyloctyl group, and a 3,7-dimethyloctyl group.

Examples of the group formed of an aliphatic cyclic hydrocarbon containing from 4 through 10 carbon atoms include a 2-methylcyclohexyl group, a 3-methylcyclohexyl group, and a 1,4-dimethylcyclohexyl group.

Next, specific examples of the (meth)acrylic acid ester compound represented by the General Formula (1) where n is 2 will be described hereinafter, but are not limited to these (meth)acrylic acid ester compounds.

Suitable examples of the (meth)acrylic acid ester compounds represented by the General Formula (1) where n is 2 include compounds represented by the following General Formula (6). 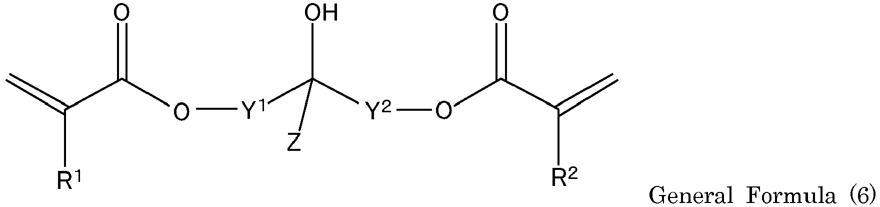 (In the General Formula (6), Y¹ and Y² each independently represent a substituted or unsubstituted alkylene group containing from 1 through 6 carbon atoms, Z represents an alkyl group containing from 1 through 3 carbon atoms, and R¹ and R² each independently represent a hydrogen atom or a methyl group.)

In the General Formula (6), Y¹ and Y² each independently represent a substituted or unsubstituted alkylene group containing from 1 through 6 carbon atoms, and Y¹ and Y² may be identical or different.

Examples of the substituent in the alkylene group include a chlorine atom.

In the General Formula (6), Z represents an alkyl group containing from 1 through 3 carbon atoms.

In the General Formula (6), R¹ and R² each independently represent a hydrogen atom or a methyl group, and may be identical or different.

Examples of the alkylene group containing from 1 through 6 carbon atoms include a methylene group, an ethylene group, a n-propylene group, a n-butylene group, a n-pentylene group, and a n-hexylene group.

Examples of the alkyl group containing from 1 through 3 carbon atoms include a methyl group, an ethyl group, and a propyl group.

Suitable examples of the compounds represented by the General Formula (6) include compounds represented by the General Formula (7). 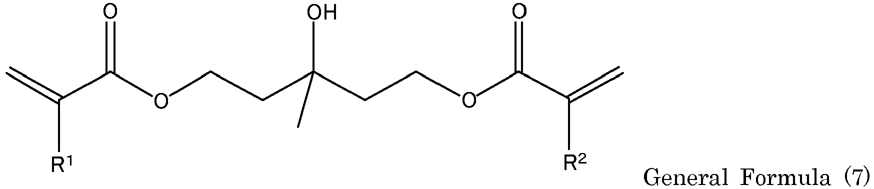 (In the General Formula (7), R¹ and R² each independently represent a hydrogen atom or a methyl group.)

In the General Formula (7), R¹ and R² each independently represent a hydrogen atom or a methyl group, R¹ and R² may be identical or different, but are preferably a hydrogen atom.

Exemplary Compounds represented by the General Formula (1) where n is 2 are given below.

### <Exemplary Compound A1>

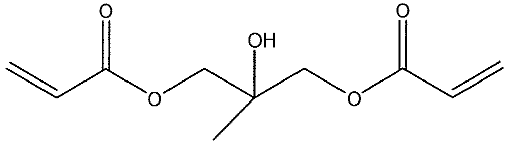

### <Exemplary Compound A2>

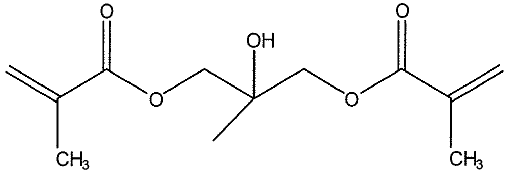

### <Exemplary Compound B1>

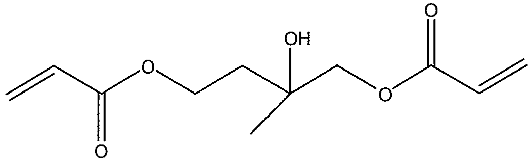

### <Exemplary Compound B2>

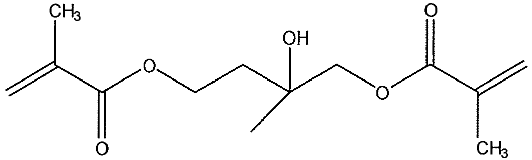

### <Exemplary Compound C1>

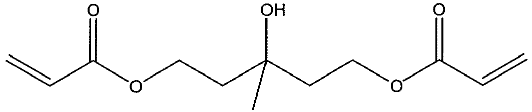

### <Exemplary Compound C2>

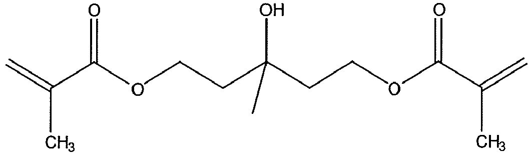

### <Exemplary Compound D1>

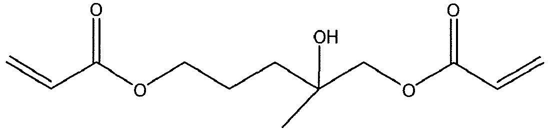

### <Exemplary Compound D2>

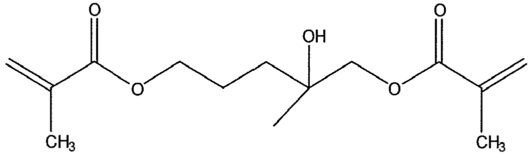

### <Exemplary Compound E1>

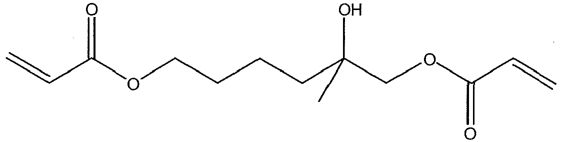

### <Exemplary Compound E2>

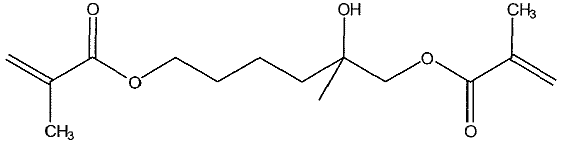

### <Exemplary Compound F1>

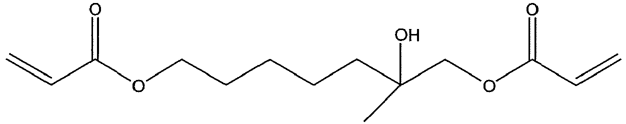

### <Exemplary Compound F2>

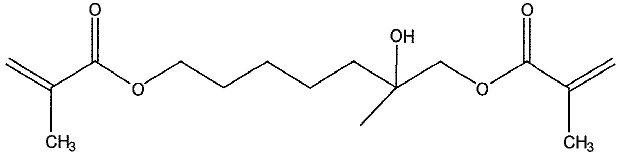

### <Exemplary Compound G1>

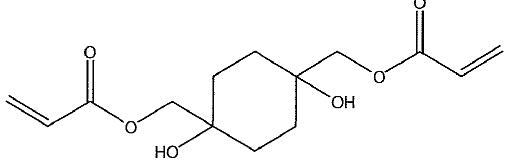

### <Exemplary Compound G2>

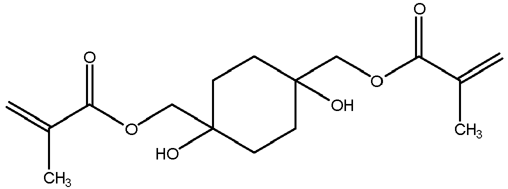

(In the General Formula (3), OH represents a tertiary hydroxyl group, R¹ represents a hydrogen atom or a methyl group, and Y represents a substituted or unsubstituted branched alkylene group containing 3 through 9 carbon atoms.)

In the General Formula (3), OH represents a tertiary hydroxyl group.

In the General Formula (3), Y represents a substituted or unsubstituted branched alkylene group containing from 3 through 9 carbon atoms.

Examples of the substituent in the branched alkylene group include a chlorine atom.

Examples of the branched alkylene group containing from 3 through 9 carbon atoms include a t-propylene group, a t-butylene group, a t-pentylene group, a t-hexylene group, a t-heptylene group, a t-octylene group, and a t-nonylene group. 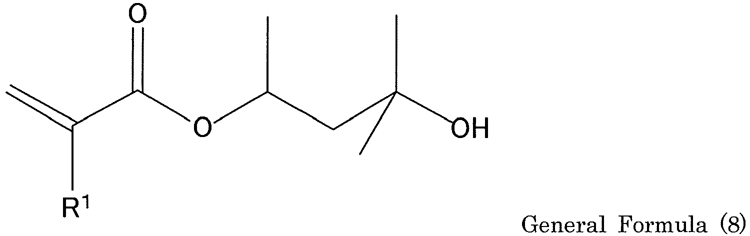 (In the General Formula (8), R¹ represents a hydrogen atom or a methyl group.)

In the General Formula (8), R¹ represents a hydrogen atom or a methyl group, but are preferably a hydrogen atom.

Suitable examples of compounds represented by the General Formula (3) include compounds represented by the following General Formula (4) and compounds represented by the following General Formula (5). Among them, compounds represented by the General Formula (5) are more preferable in terms of active energy ray polymerizing ability and active energy ray curing ability. 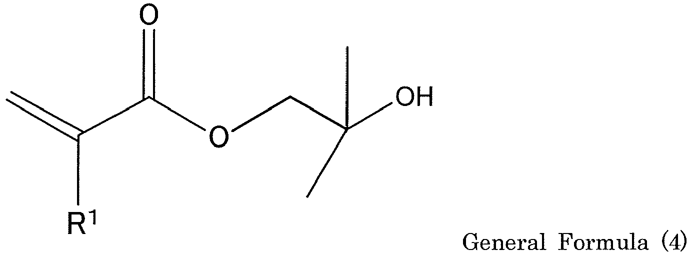 (In the General Formula (4), R¹ represents a hydrogen atom or a methyl group.)

In the General Formula (4), R¹ represents a hydrogen atom or a methyl group, but are preferably a hydrogen atom. 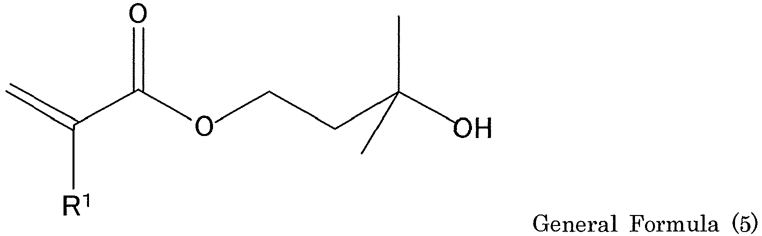 (In the General Formula (5), R¹ represents a hydrogen atom or a methyl group.)

In the General Formula (5), R¹ represents a hydrogen atom or a methyl group, but are preferably a hydrogen atom.

Exemplary Compounds represented by the General Formula (1) where n is 1 are given below.

### <Exemplary Compound H1>

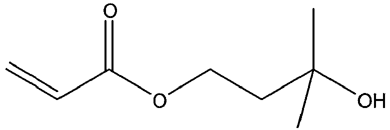

### <Exemplary Compound H2>

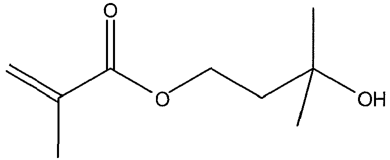

### <Exemplary Compound I1>

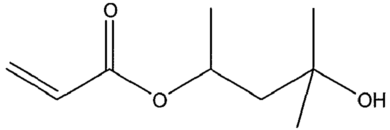

### <Exemplary Compound I2>

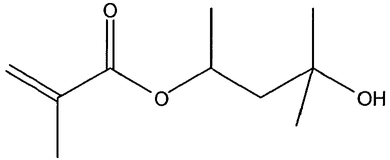

### <Exemplary Compound J1>

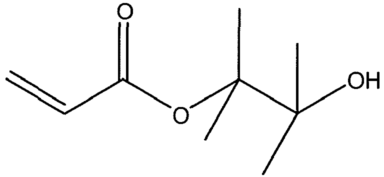

### <Exemplary Compound J2>

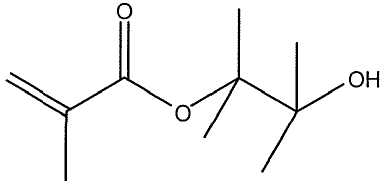

### <Exemplary Compound K1>

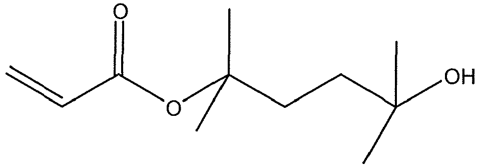

### <Exemplary Compound K2>

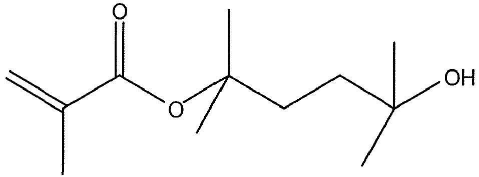

### <Exemplary Compound L1>

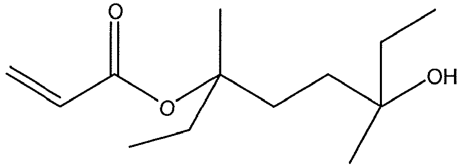

### <Exemplary Compound L2>

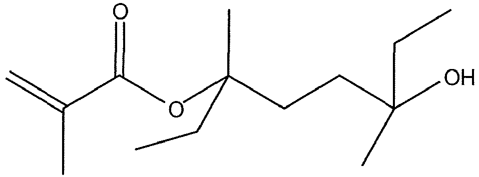

### <Exemplary Compound M1>

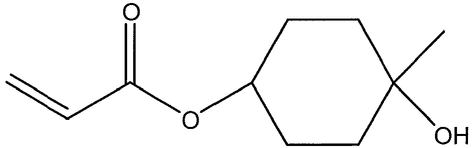

### <Exemplary Compound M2>

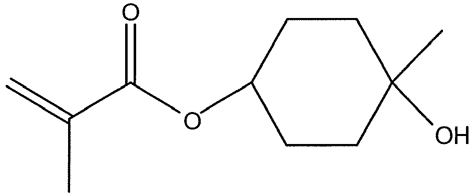

### <Exemplary Compound N1>

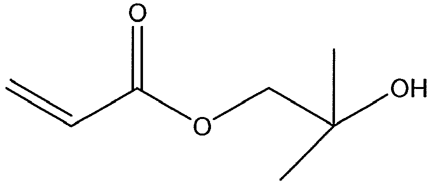

### <Exemplary Compound N2>

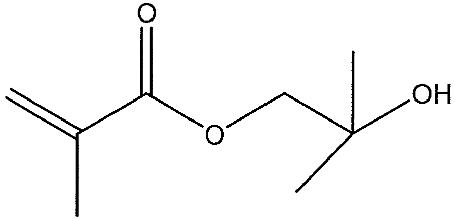

### <Exemplary Compound O1>

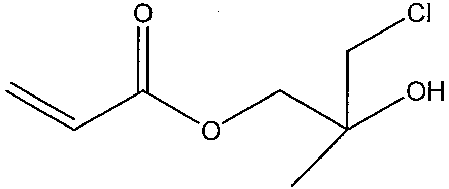

### <Exemplary Compound O2>

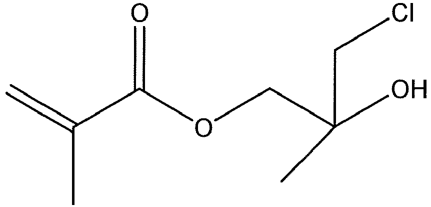

### <Exemplary Compound P1>

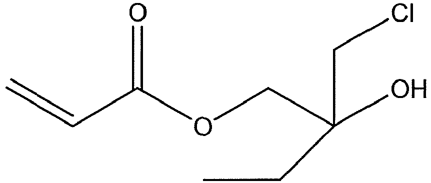

### <Exemplary Compound P2>

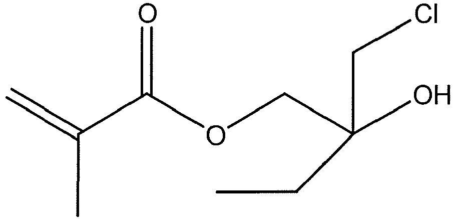

### <Exemplary Compound Q1>

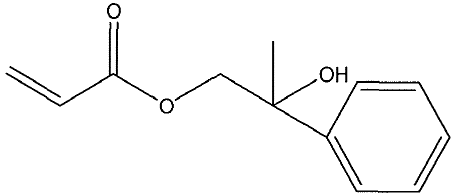

### <Exemplary Compound Q2>

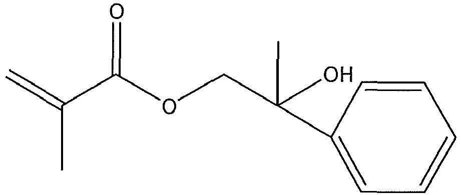

### <Exemplary Compound R1>

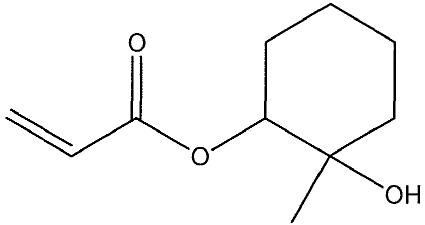

### <Exemplary Compound R2>

The (meth)acrylic acid ester compounds represented by the General Formula (1), which are structurally different depending on an integer of m and n, and the kind of R¹, may be used alone or in combination of the different compounds. The different compounds include an structural isomer, and a mass ratio between two or more different compounds is not particularly limited and may be appropriately selected depending on the intended purpose.

### -Production Method-

A method for producing the (meth)acrylic acid ester compound represented by the General Formula (1) is as follows. For example, in a flask, triol or diol is added to dehydrated dichloromethane. The flask is purged with an argon gas, followed by adding triethylamine thereto. The flask was cooled to about -10°C, and then methacryloyl chloride is gradually added thereto so that a system temperature is -10°C or more but -5°C or less. Then the resultant mixture is stirred for 2 hours at room temperature. Moreover, the precipitated product is removed through filtration, and the filtrate is washed with water, a saturated sodium hydrogen carbonate solution, and a saturated sodium chloride solution. Next, the resultant product is dried with sodium sulfate, and is concentrated under reduced pressure, to obtain a brown oily product. Moreover, a column is loaded with product name: Wakogel (registered trademark) C300 (product of Wako Pure Chemical Industries, Ltd.), and the oily product is purified by column chromatography using hexane and ethyl acetate as an eluent, to obtain a (meth)acrylic acid ester compound represented by the General Formula (1). Moreover, other than the above method, the (meth)acrylic acid ester compound can be obtained by reacting triol or diol with methacrylic acid to undergo dehydration condensation in a hydrophobic solvent (e.g., toluene) in the presence of an acid catalyst.

### -Identification Method-

A ¹H-NMR spectrum and an IR spectrum can be used to identify a (meth)acrylic acid ester compound represented by the General Formula (1).

A ¹H-NMR (500 MHz) (product of JEOL) can be used to measure the ¹H-NMR spectrum. In the measured spectrum, it can be confirmed that a peak existing at a side of a low magnetic field (from about 5.5 ppm through 6.5 ppm) exhibits a (meth)acrylic acid ester structure into the (meth)acrylic acid ester compound.

A FT-IR Spectrum GX (product of PERKIN ELMER) can be used to measure the IR spectrum. In the measured spectrum, it can be confirmed that a peak existing near from about 1,700 cm⁻¹ through about 1,750 cm⁻¹ and a peak existing near about 810 cm⁻¹ exhibit a (meth)acrylic acid ester structure introduced into the (meth)acrylic acid ester compound. Moreover, it is found that a broad peak existing near 3,500 cm⁻¹ exhibits a hydroxyl group introduced into the (meth)acrylic acid ester compound.

### (Active-energy-ray-curable composition)

An active-energy-ray-curable composition of the present disclosure contains a (meth)acrylic acid ester compound containing a tertiary hydroxyl group in a molecule of the (meth)acrylic acid ester compound and represented by General Formula (1) below, and further contains other components if necessary. 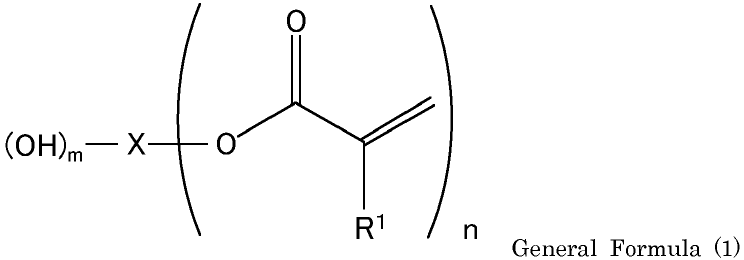 (In the General Formula (1), OH represents a tertiary hydroxyl group, m represents an integer of a range of from 1 through 2, n is 2, R¹ represents a hydrogen atom or a methyl group, and X represents a group formed of an aliphatic hydrocarbon containing from 4 through 10 carbon atoms or a group formed of an aliphatic cyclic hydrocarbon containing from 4 through 10 carbon atoms.)

As the (meth)acrylic acid ester compound represented by the General Formula (1), the same materials as the materials of the active energy ray polymerizable compound of the present disclosure can be used.

An amount of the (meth)acrylic acid ester compound represented by the General Formula (1) is preferably 20% by mass or more but 98% by mass or less, more preferably 30% by mass or more but 90% by mass or less, particularly preferably 30% by mass or more but 80% by mass or less, relative to the total amount of the active-energy-ray-curable composition.

### <Other Components>

Examples of the other components include a polymerization initiator, a colorant, an active energy ray polymerizable compound other than the (meth)acrylic acid ester compound represented by the General Formula (1), a sensitizer, a cosensitizer, a polymerization inhibitor, a solvent, a surfactant, a leveling additive, a matting agent, a polyester resin for adjusting membrane property, a polyurethane resin, a vinyl resin, an acrylic resin, a rubber resin, waxes, and a tackifier. These may be used alone or in combination thereof.

### <Polymerization Initiator>

The active-energy-ray-curable composition of the present disclosure optionally contains a polymerization initiator. The polymerization initiator produces active species such as a radical or a cation upon application of energy of an active energy ray and initiates polymerization of a polymerizable compound (monomer or oligomer). As the polymerization initiator, it is suitable to use a known radical polymerization initiator, cation polymerization initiator, base producing agent, or a combination thereof. Of these, a radical polymerization initiator is preferable. Moreover, the polymerization initiator preferably accounts for 5 percent by weight to 20 percent by weight of the total content of the composition (100 percent by weight) to obtain sufficient curing speed.

Specific examples of the radical polymerization initiators include, but are not limited to, aromatic ketones, acylphosphine oxide compounds, aromatic onium chlorides, organic peroxides, thio compounds (thioxanthone compounds, thiophenyl group containing compounds, etc.), hexaaryl biimidazole compounds, ketoxime ester compounds, borate compounds, azinium compounds, metallocene compounds, active ester compounds, compounds having a carbon halogen bond(s), and alkyl amine compounds.

In addition, a polymerization accelerator (sensitizer) is optionally used together with the polymerization initiator. The polymerization accelerator is not particularly limited. Preferred examples thereof include, but are not limited to, amines such as trimethylamine, methyl dimethanol amine, triethanol amine, p-diethylamino acetophenone, p-dimethyl amino ethylbenzoate, p-dimethyl amino benzoate-2-ethylhexyl, N,N-dimthyl benzylamine and 4,4'-bis(diethylamino)benzophenone. The content thereof is determined depending on the identity (type) of the polymerization initiator and the content thereof.

### <Active Energy Rays>

Active energy rays used for curing an active-energy-ray-curable composition of the present disclosure are not particularly limited, so long as they are able to give necessary energy for allowing polymerization reaction of polymerizable components in the composition to proceed. Examples of the active energy rays include electron beams, α-rays, β-rays, γ-rays, and X-rays, in addition to ultraviolet rays. When a light source having a particularly high energy is used, polymerization reaction can be allowed to proceed without a polymerization initiator. In addition, in the case of irradiation with ultraviolet ray, mercury-free is preferred in terms of protection of environment. Therefore, replacement with GaN-based semiconductor ultraviolet light-emitting devices is preferred from industrial and environmental point of view. Furthermore, ultraviolet light-emitting diode (UV-LED) and ultraviolet laser diode (UV-LD) are preferable as an ultraviolet light source. Small sizes, long time working life, high efficiency, and high cost performance make such irradiation sources desirable.

### <Colorant>

The composition of the present disclosure may contain a colorant. As the colorant, various pigments and dyes may be used that impart black, white, magenta, cyan, yellow, green, orange, and gloss colors such as gold and silver, depending on the intended purpose of the composition and requisite properties thereof. A content of the colorant in the composition is not particularly limited, and may be appropriately determined considering, for example, a desired color density and dispersibility of the colorant in the composition. However, it is preferably from 0.1% by mass to 20% by mass relative to the total mass (100% by mass) of the composition. Incidentally, the active-energy-ray-curable composition of the present disclosure does not necessarily contain a colorant but can be clear and colorless. In such a case, for example, such a clear and colorless composition is good for an overcoating layer to protect an image.

The pigment can be either inorganic or organic, and two or more of the pigments can be used in combination.

Specific examples of the inorganic pigments include, but are not limited to, carbon blacks (C.I. Pigment Black 7) such as furnace black, lamp black, acetylene black, and channel black, iron oxides, and titanium oxides.

Specific examples of the organic pigments include, but are not limited to, azo pigments such as insoluble azo pigments, condensed azo pigments, azo lakes, and chelate azo pigments, polycyclic pigments such as phthalocyanine pigments, perylene pigments, perinone pigments, anthraquinone pigments, quinacridone pigments, dioxazine pigments, thioindigo pigments, isoindolinone pigments, and quinofuranone pigments, dye chelates (e.g., basic dye chelates, acid dye chelates), dye lakes (e.g., basic dye lakes, acid dye lakes), nitro pigments, nitroso pigments, aniline black, and daylight fluorescent pigments.

In addition, a dispersant is optionally added to enhance the dispersibility of pigment. The dispersant has no particular limit and can be, for example, polymer dispersants conventionally used to prepare pigment dispersion (material).

The dyes include, for example, acidic dyes, direct dyes, reactive dyes, basic dyes, and combinations thereof.

It is preferable that the colorant be appropriately dispersed in the active-energy-ray-curable composition. Examples of the dispersing include a method for dispersing the colorant using a dispersing device and a method for dispersing the colorant by addition of a dispersing agent.

The dispersing device is not particularly limited and may be appropriately selected depending on the intended purpose. Examples of the dispersing device include a ball mill, a sand mill, a ring mill, an attritor, a roll mill, an agitator, a Henschel mixer, a colloid mill, an ultrasonic homogenizer, a pearl mill, a wet jet mill, and a paint shaker.

The dispersing agent is not particularly limited and may be appropriately selected depending on the intended purpose. Examples of the dispersing agent include a polymer dispersing agent.

A volume average particle diameter of the colorant is not particularly limited and may be appropriately selected depending on the intended purpose, but it is preferably 0.005 µm or more but 0.5 µm or less, more preferably 0.01 µm or more but 0.45 µm or less, particularly preferably 0.015 µm or more but 0.4 µm or less. When the volume average particle diameter of the colorant is 0.005 µm or more but 0.5 µm or less, head nozzles can be prevented from clogging, and thus storage stability, transparency, and active energy ray curing ability of the active-energy-ray-curable composition can be maintained.

A mass ratio (dispersing agent / colorant) of the amount of the colorant (% by mass) to the amount of the dispersing agent (% by mass) is preferably 0.01 or more but 0.50 or less.

An amount of the colorant is preferably 0.5% by mass or more but 10% by mass or less, more preferably 1% by mass or more but 8% by mass or less, relative to the total amount of the active-energy-ray-curable composition.

Note that, an amount of the colorant in a white active-energy-ray-curable composition containing a white pigment (e.g., titanium oxide) as a colorant is preferably 5% by mass or more but 30% by mass or less, more preferably 10% by mass or more but 25% by mass or less, in order to maintain concealment.

### -Active Energy Ray Polymerizable Compound Other Than (Meth)acrylic Acid Ester Compound Represented by the General Formula (1)-

An active energy ray polymerizable compound other than the (meth)acrylic acid ester compound represented by the General Formula (1) is not particularly limited and may be appropriately selected depending on the intended purpose. Examples of the active energy ray polymerizable compound other than the (meth)acrylic acid ester compound represented by the General Formula (1) include a photoradically polymerizable compound, a photocationically polymerizable compound, and a photoanionically polymerizable compound. These may be used alone or in combination thereof.

The photoradically polymerizable compound is not particularly limited so long as it is a compound containing one or more ethylenically unsaturated group(s) capable of photopolymerizing. Examples of the photoradically polymerizable compound include a monomer, an oligomer, and a polymer. These may be used alone or in combination thereof.

Examples of the photoradically polymerizable compound include unsaturated carboxylic acids (e.g., acrylic acid, methacrylic acid, itaconic acid, crotonic acid, isocrotonic acid, and maleic acid), salts of the unsaturated carboxylic acids and compounds derived from unsaturated carboxylic acids, anhydrides containing an ethylenically unsaturated group, acrylonitrile, styrene, unsaturated polyesters, unsaturated polyethers, unsaturated polyamides, and unsaturated polyurethanes. These may be used alone or in combination thereof.

Specific examples of the photoradically polymerizable compound include: acrylic acid derivatives (e.g., 2-hydroxy ethylacrylate, butoxy ethylacrylate, carbitol acrylate, cyclohexyl acrylate, tetrahydrofurfuryl acrylate, benzyl acrylate, bis(4-acryloxy polyethoxyphenyl)propane, neopentylglycol diacrylate, ethoxylated neopentylglycol diacrylate, propoxylated neopentylglycol diacrylate, 1,6-hexanediol diacrylate, ethylene glycol diacrylate, diethylene glycol diacrylate, triethylene glycol diacrylate, tetraethylene glycol diacrylate, polyethylene glycol diacrylate, propylene glycol diacrylate, dipropylene glycol diacrylate, tripropylene glycol diacrylate, tetrapropylene glycol diacrylate, polypropylene glycol diacrylate, pentaerythritol triacrylate, pentaerythritol tetraacrylate, dipentaerythritol tetraacrylate, trimethylol propane triacrylate, tetramethylolmethane tetraacrylate, oligoester acrylate, and epoxy acrylate); methacrylic acid derivatives (e.g., methyl methacrylate, n-butylmethacrylate, allylmethacrylate, glycidyl methacrylate, benzyl methacrylate, dimethylamino methyl methacrylate, 1,6-hexanediol dimethacrylate, ethylene glycol dimethacrylate, triethylene glycol dimethacrylate, polyethylene glycol dimethacrylate, polypropylene glycol dimethacrylate, trimethylol ethane trimethacrylate, trimethylol propane trimethacrylate, and 2,2-bis(4-methacryloxy polyethoxyphenyl)propane); acrylic amide derivatives (e.g., N-methylol acrylamide, diacetone acrylamide, 2-hydroxyethyl acrylamide, and acryloyl morpholine); derivatives of allyl compounds (e.g., allylglycidyl ether, diallyl phthalate, and triallyltrimellitate); divinyl ether compounds or trivinyl ether compounds (e.g., ethylene glycol divinyl ether, ethylene glycol monovinyl ether, diethylene glycol divinyl ether, triethylene glycol monovinyl ether, triethylene glycol divinyl ether, propylene glycol divinyl ether, dipropylene glycol divinyl ether, butanedioldivinyl ether, hexanediol divinyl ether, cyclohexane dimethanoldivinyl ether, hydroxyethyl monovinyl ether, hydroxynonyl monovinyl ether, and trimethylol propane trivinyl ether); monovinyl ether compounds (e.g., ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexane dimethanolmonovinyl ether, n-propyl vinyl ether, isopropyl vinyl ether, isopropenyl ether-o-propylene carbonate, dodecyl vinyl ether, diethylene glycol monovinyl ether, and octadecyl vinyl ether); 2-ethylhexyl diglycol acrylate, 2-hydroxy-3-phenoxy propyl acrylate, 2-hydroxybutyl acrylate, hydroxypivalic acid neopentylglycol diacrylate, 2-acryloiloxy ethyl phthalic acid, metoxy polyethylene glycol acrylate, tetramethylolmethane triacrylate, 2-acryloiloxy ethyl-2-hydroxyethyl phthalic acid, dimethylol tricyclodecane diacrylate, ethoxylated phenyl acrylate, 2-acryloiloxyethyl succinic acid, nonylphenol ethylene oxide adduct acrylate, modified glycerin triacrylate, bisphenol A diglycidyl etheracrylic acid adduct, modified bisphenol A diacrylate, phenoxy polyethylene glycol acrylate, 2-acryloiloxy ethyl hexahydro phthalic acid, propylene oxide adduct diacrylate of bisphenol A, ethylene oxide adduct diacrylate of bisphenol A, dipentaerythritol hexaacrylate, pentaerythritol triacrylate, tolylene diisocyanate urethane prepolymer, lactone-modified flexible acrylate, butoxy ethylacrylate, propylene glycol diglycidyl etheracrylic acid adduct, pentaerythritol triacrylate, hexamethylene diisocyanate urethane prepolymer, 2-hydroxy ethylacrylate, methoxy dipropylene glycol acrylate, ditrimethylol propane tetraacrylate, pentaerythritol triacrylate, hexamethylene diisocyanate urethane prepolymer, stearyl acrylate, isoamyl acrylate, isomyristyl acrylate, isostearyl acrylate, and lactone-modified acrylate. These may be used alone or in combination thereof.

Examples of the photocationically polymerizable compound include an epoxy resin, a vinyl ester compound, and an oxetane compound. These may be used alone or in combination thereof.

Examples of the photoanionically polymerizable compound include an epoxy compound, a lactone compound, an acrylic compound, and a methacrylic compound. Among them, an acrylic compound and a methacrylic compound that are exemplified as a photoradically polymerizable compound are preferable.

Examples of combinations of the active energy ray polymerizable compound and the polymerization initiator include a combination of the photoradically polymerizable compound and the photoradically polymerization initiator, a combination of the photocationically polymerizable compound and the photocationically polymerization initiator, and a combination of the photoanionically polymerizable compound and the photoanionically polymerization initiator.

A mass ratio (another active energy ray polymerizable compound / (meth)acrylic acid ester compound represented by the General Formula (1)) of the amount (% by mass) of the (meth)acrylic acid ester compound represented by General Formula (1) to the amount (% by mass) of the another active energy ray polymerizable compound is preferably 0.01 or more but 100 or less, more preferably 0.1 or more but 50 or less.

A mass ratio [(polymerization initiator) / (active energy ray polymerizable compound + the colorant)] of the amount (% by mass) of the polymerization initiator to the amount (% by mass) of the active energy ray polymerizable compound and the colorant is preferably 0.01 or more but 0.50 or less, more preferably 0.02 or more but 0.40 or less, particularly preferably 0.05 or more but 0.30 or less.

### <Sensitizer>

The active-energy-ray-curable composition can contain the sensitizer in order to facilitate decomposition of the polymerization initiator through irradiation of the active energy ray.

The sensitizer absorbs an active energy ray to be in an electronically excited state. Then, in that state, the sensitizer contacts with the polymerization initiator, to facilitate chemical changes (decomposition, radical reaction, and generation of acids or bases) of the polymerization initiator through action such as transfer of electrons, transfer of energy, and generation of heat.

A mass ratio (sensitizer / polymerization initiator) of the amount (% by mass) of the sensitizer to the amount (% by mass) of the polymerization initiator is preferably 5 × 10⁻³ or more but 200 or less, more preferably 0.02 or more but 50 or less.

The sensitizer is not particularly limited. A sensitizing dye having an absorption wavelength falling within a range of from 350 nm through 450 nm can be used.

Examples of the sensitizing dye includes polynuclear aromatic compounds (e.g., pyrene, perylene, and triphenylene), xanthenes (e.g., fluorescein, eosin, erythrosine, Rhodamine B, and rose bengal), cyanines (e.g., thiacarbocyanine and oxacarbocyanine), merocyanines (e.g., merocyanine and carbomerocyanine), thiazines (e.g., thionin, methylene blue, and toluidine blue), acridines (e.g., acridine orange, chloroflavin, and acriflavin), anthraquinones (e.g., anthraquinone), squaryliums (e.g., squarylium), and coumarins (e.g.,7-diethylamino-4-methylcoumarin). These may be used alone or in combination thereof.

### -Cosensitizer-

The cosensitizer can improve the sensitizing dye at sensitivity to the active energy ray, and can prevent the active energy ray polymerizable compound from polymerizing by oxygen.

The cosensitizer is not particularly limited. Examples of the cosensitizer include: amine compounds such as triethanolamine, p-dimethylamino benzoic acid ethyl ester, p-formyl dimethylaniline, and p-methylthio dimethylaniline; and thiols and sulfides such as 2-mercapto benzothiazole, 2-mercapto benzoxazole, 2-mercapto benzimidazole, 2-mercapto 4(3H)-quinazoline, and β-mercapto naphthalene. These may be used alone or in combination thereof.

The surfactant is not particularly limited and may be appropriately selected depending on the intended purpose. Examples of the surfactant include higher fatty acid surfactants, silicone surfactants, and fluorine surfactants.

### -Polymerization Inhibitor-

The active-energy-ray-curable composition can contain the polymerization inhibitor in order to improve storage property (storage stability) of the active-energy-ray-curable composition, and in order to prevent heads from clogging due to thermal polymerization in cases where the active-energy-ray-curable composition is heated for lowering viscosity, to be ejected.

The polymerization inhibitor is not particularly limited and may be appropriately selected depending on the intended purpose. Examples of the polymerization inhibitor include hydroquinone, benzoquinone, p-methoxyphenol, TEMPO, TEMPOL, and a cupferron complex of aluminum. These may be used alone or in combination thereof.

An amount of the polymerization inhibitor is preferably 200 ppm or more but 20,000 ppm or less.

Moreover, the amount of the polymerization inhibitor is preferably 0.05% by mass or more but 1.0% by mass or less relative to the total amount of the active-energy-ray-curable composition.

### <Organic Solvent>

The active-energy-ray-curable composition of the present disclosure optionally contains an organic solvent although it is preferable to spare it.
The curable composition free of an organic solvent, in particular volatile organic compound (VOC), is preferable because it enhances safety at where the composition is handled and makes it possible to prevent pollution of the environment. Incidentally, the organic solvent represents a conventional non-reactive organic solvent, for example, ether, ketone, xylene, ethyl acetate, cyclohexanone, and toluene, which is clearly distinguished from reactive monomers. Furthermore, "free of" an organic solvent means that no organic solvent is substantially contained. The content thereof is preferably less than 0.1 percent by mass.

### -Tackifier-

The active-energy-ray-curable composition can contain the tackifier in order to improve adhesive property to, for example, polyolefin and PET.

The active-energy-ray-curable composition can be stored in a container, to be used as an ink cartridge. As a result, it becomes unnecessary to directly touch the active-energy-ray-curable composition during replacement of the active-energy-ray-curable composition, which can prevent users from making their fingers or clothes dirty. Moreover, the ink cartridge can prevent the active-energy-ray-curable composition from contaminating foreign substances (e.g., dust).

### <Viscosity>

Viscosity of the active-energy-ray-curable composition of the present disclosure may be adjusted depending on application fields and application units without any limitation. However, when a unit configured to eject the active-energy-ray-curable composition from nozzles is applied, the viscosity thereof is preferably 3 mPa·s or more but 70 mPa·s or less, more preferably 5 mPa·s or more but 15 mPa·s or less, particularly preferably 6 mPa·s or more but 12 mPa·s or less, at a temperature of a range from 20°C through 65°C, desirably at a temperature of 25°C. Moreover, the viscosity of the active-energy-ray-curable composition particularly preferably satisfies the aforementioned range without containing a solvent therein. Note that, a cone plate rotary viscometer, VISCOMETER TVE-22L (product of Toki Sangyo Co., Ltd) is used to measure the viscosity with cone rotor (1°34' × R24) by appropriately setting the following conditions (number of rotations: 50 rpm, temperature of thermostatic circulating water: a range of from 20°C through 65°C). Here, VISCOMATE VM-150III can be used to adjust temperature of the circulating water.

### <Preparation of Active-energy-ray-curable composition>

The active-energy-ray-curable composition of the present disclosure can be prepared by using the components described above. The preparation devices and conditions are not particularly limited. For example, the curable - composition can be prepared by subjecting a polymerizable monomer, a pigment, a dispersant, etc., to a dispersion treatment using a dispersing machine such as a ball mill, a kitty mill, a disk mill, a pin mill, and a DYNO-MILL to prepare a pigment liquid dispersion, and further mixing the pigment liquid dispersion with a polymerizable monomer, an initiator, a polymerization initiator, and a surfactant.

### <Application Field>

The application field of the active-energy-ray-curable composition of the present disclosure is not particularly limited. It can be applied to any field where active-energy-ray-curable compositions are used. For example, the curable composition is selected to a particular application and used for a resin for processing, a paint, an adhesive, an insulant, a releasing agent, a coating material, a sealing material, various resists, and various optical materials.

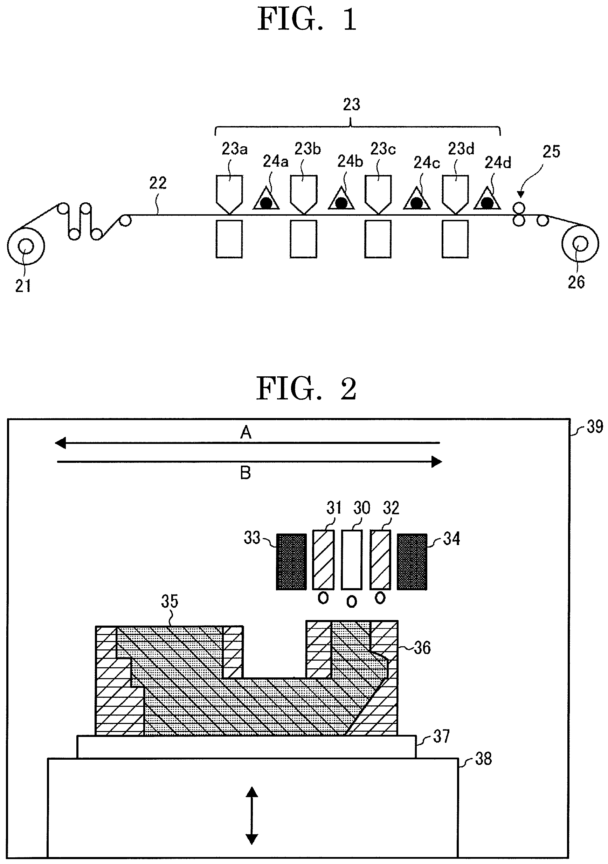

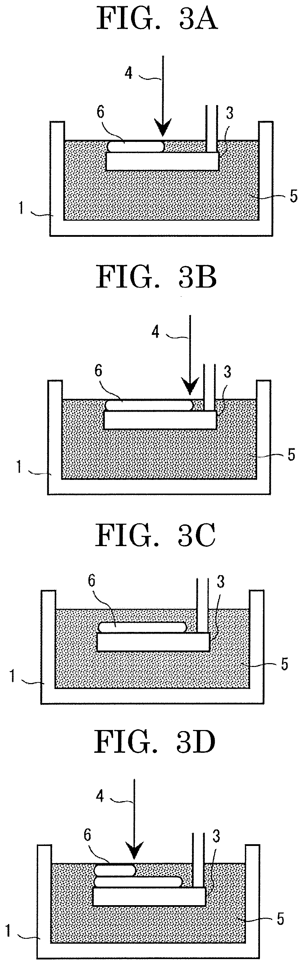

Furthermore, the active-energy-ray-curable composition of the present disclosure can be used as an ink to form two-dimensional texts, images, and designed coating film on various substrates and in addition as a solid object forming material to form a three-dimensional object. This three dimensional object forming material may also be used as a binder for powder particles used in a powder layer laminating method of forming a three-dimensional object by repeating curing and layer-forming of powder layers, and as a three-dimensional object constituent material (a model material) and a supporting member used in an additive manufacturing method (a stereolithography method) as illustrated in FIG. 2, FIG. 3A, FIG. 3B, FIG. 3C, and FIG. 3D. FIG. 2 is a diagram illustrating a method of additive manufacturing to sequentially form layers of the active-energy-ray-curable composition of the present disclosure one on top of the other by repeating discharging the curable composition to particular areas followed by curing upon irradiation of an active energy ray. FIGs. 3A to 3D are each a diagram illustrating a method of additive manufacturing to sequentially form cured layers 6 having respective predetermined forms one on top of the other on a movable stage 3 by irradiating a storing pool (storing part) 1 of the active-energy-ray-curable composition 5 of the present disclosure with the active energy ray 4.

An apparatus for fabricating a three-dimensional object by the active-energy-ray-curable composition of the present disclosure is not particularly limited and can be a known apparatus. For example, the apparatus includes a containing device, a supplying device, and a discharging device of the curable composition, and an active energy ray irradiator.

In addition, the present disclosure includes cured materials obtained by curing the active-energy-ray-curable composition and processed products obtained by processing structures having the cured materials on a substrate. The processed product is fabricated by, for example, heat-drawing and punching a cured material or structure having a sheet-like form or film-like form. Examples thereof are gauges or operation panels of vehicles, office machines, electric and electronic machines, and cameras.

The substrate is not particularly limited. It can suitably be selected to a particular application. Examples thereof include paper, thread, fiber, fabrics, leather, metal, plastic, glass, wood, ceramic, or composite materials thereof. Of these, plastic substrates are preferred in terms of processability.

### (Active-energy-ray-curable ink)

An active-energy-ray-curable ink of the present disclosure contains the active-energy-ray-curable composition of the present disclosure, and further contains other components if necessary.

### <Other Components>

As the other components in the active-energy-ray-curable ink, the same materials as other components in the active energy ray polymerizable compound of the present disclosure can be used.

An active-energy-ray-curable ink of the present disclosure is preferably used for an inkjet.

### <Composition Stored Container>

The composition stored container of the present disclosure contains the active-energy-ray-curable composition and is suitable for the applications as described above. For example, if the active-energy-ray-curable composition of the present disclosure is used for ink, a container that stores the ink can be used as an ink cartridge or an ink bottle. Therefore, users can avoid direct contact with the ink during operations such as transfer or replacement of the ink, so that fingers and clothes are prevented from contamination. Furthermore, inclusion of foreign matters such as dust in the ink can be prevented. In addition, the container can be of any size, any form, and any material. For example, the container can be designed to a particular application. It is preferable to use a light blocking material to block the light or cover a container with a light blocking sheet, etc.

### <Image Forming Method and Image Forming Apparatus>

The image forming method of the present disclosure includes at least an irradiating step of irradiating the curable composition of the present disclosure with an active energy ray to cure the curable composition. The image forming apparatus of the present disclosure includes at least an irradiator to irradiate the curable composition of the present disclosure with an active energy ray and a storing part containing the active-energy-ray-curable composition of the present disclosure. The storing part may include the container mentioned above. Furthermore, the method and the apparatus may respectively include a discharging step and a discharging device to discharge the active-energy-ray-curable composition. The method of discharging the curable composition is not particularly limited, and examples thereof include a continuous jetting method and an on-demand method. The on-demand method includes a piezo method, a thermal method, an electrostatic method, etc.

FIG. 1 is a diagram illustrating a two-dimensional image forming apparatus equipped with an inkjet discharging device. Printing units 23a, 23b, 23c, and 23d respectively having ink cartridges and discharging heads for yellow, magenta, cyan, and black active-energy-ray-curable inks discharge the inks onto a recording medium 22 fed from a supplying roller 21. Thereafter, light sources 24a, 24b, 24c, and 24d configured to cure the inks emit active energy rays to the inks, thereby curing the inks to form a color image. Thereafter, the recording medium 22 is conveyed to a processing unit 25 and a printed matter reeling roll 26. Each of the printing unit 23a, 23b, 23c and 23d may have a heating mechanism to liquidize the ink at the ink discharging portion. Moreover, in another embodiment of the present disclosure, a mechanism may optionally be included to cool down the recording medium to around room temperature in a contact or non-contact manner. In addition, the inkjet recording method may be either of serial methods or line methods. The serial methods include discharging an ink onto a recording medium by moving the head while the recording medium intermittently moves according to the width of a discharging head. The line methods include discharging an ink onto a recording medium from a discharging head held at a fixed position while the recording medium continuously moves.

The recording medium 22 is not particularly limited. Specific examples thereof include, but are not limited to, paper, film, metal, or complex materials thereof. The recording medium 22 takes a sheet-like form but is not limited thereto. The image forming apparatus may have a one-side printing configuration and/or a two-side printing configuration.

Optionally, multiple colors can be printed with no or weak active energy ray from the light sources 24a, 24b, and 24c followed by irradiation of the active energy ray from the light source 24d. As a result, energy and cost can be saved.

The recorded matter having images printed with the ink of the present disclosure includes articles having printed images or texts on a plain surface of conventional paper, resin film, etc., a rough surface, or a surface made of various materials such as metal or ceramic. In addition, by laminating layers of images in part or the entire of a recording medium, a partially stereoscopic image (formed of two dimensional part and three-dimensional part) and a three dimensional objects can be fabricated.

Fig. 2 is a schematic diagram illustrating another example of the image forming apparatus (apparatus to fabricate a 3D object) of the present disclosure. An image forming apparatus 39 illustrated in Fig. 2 sequentially forms thin layers one on top of the other using a head unit having inkjet heads arranged movable in the directions indicated by the arrows A and B. In the image forming apparatus 39, an ejection head unit 30 for additive manufacturing ejects a first active-energy-ray-curable composition, and ejection head units 31 and 32 for support and curing these compositions ejects a second active-energy-ray-curable composition having a different composition from the first active-energy-ray-curable composition, while ultraviolet irradiators 33 and 34 adjacent to the ejection head units 31 and 32 cure the compositions. To be more specific, for example, after the ejection head units 31 and 32 for support eject the second active-energy-ray-curable composition onto a substrate 37 for additive manufacturing and the second active-energy-ray-curable composition is solidified by irradiation of an active energy ray to form a first substrate layer having a space for composition, the ejection head unit 30 for additive manufacturing ejects the first active-energy-ray-curable composition onto the pool followed by irradiation of an active energy ray for solidification, thereby forming a first additive manufacturing layer. This step is repeated multiple times lowering the stage 38 movable in the vertical direction to laminate the supporting layer (or support layer) and the additive manufacturing layer to fabricate a solid object 35. Thereafter, an additive manufacturing support 36 is removed, if desired. Although only a single ejection head unit 30 for additive manufacturing is provided to the image forming apparatus illustrated 39 in Fig. 2, it can have two or more units 30.

### (Printed Matter)

The printed matter includes not only a matter obtained by printing an image on a smooth surface of plain paper or a resin film using the active-energy-ray-curable ink or the active-energy-ray-curable composition of the present disclosure, but also a matter obtained by printing an image on a concave-convex surface of the recording medium and a matter obtained by printing an image on a surface of the recording medium formed of various materials such as metal and ceramic.

Moreover, the active energy ray polymerizable compound and the active-energy-ray-curable composition of the present disclosure are suitable for materials of inks, and can be applied to a molding resin, a paint material, an adhesive agent, an insulating material, a release agent, a coating material, a sealing agent, various resists, and various optical materials.

### (Cured Material)

A cured material of the present disclosure can be obtained by irradiating the active-energy-ray-curable composition of the present disclosure and the active-energy-ray-curable ink of the present disclosure with active energy rays.

As the aforementioned active energy ray, the same active energy ray as the active energy ray for curing the active-energy-ray-curable composition can be used.

### (Decorative Body)

A decorative body of the present disclosure contains a base and a cured material of the present disclosure decorated on a surface of the base.

The base is not particularly limited and may be appropriately selected depending on the intended purpose. Examples of the base include paper, a thread, a fiber, a clothe, a leather, a metal, a plastic, a glass, a lumber, a ceramic, and composite materials thereof. A plastic is preferable in terms of processing property.

### (Photocurable Composition)

The photocurable composition contains the active energy ray polymerizable compound of the present disclosure, and further contains other components if necessary.

As the aforementioned other components, the same materials as the other components used for preparing the active-energy-ray-curable composition can be used.

### Examples

The present disclosure will be described with reference to the following Examples and Comparative Examples. However, it should be noted that the present disclosure is not limited to these Examples. Incidentally, "part(s)" and "%" in the Examples each mean "part(s) by mass" and "% by mass". Each of the compounds was identified based on ¹H-NMR spectrum and IR spectrum. The ¹H-NMR spectrum was measured using ¹H-NMR (500 MHz) (product of JEOL), and the IR spectrum was measured using FT-IR SpectrumGX (product of PERKIN ELMER). Moreover, cone plate rotary viscometer VISCOMETER TVE-22L (product of Toki Sangyo Co., Ltd) was used to measure viscosity of each of the compounds with a cone rotor (1°34' × R24) under the following conditions (number of rotations: 50 rpm, temperature of thermostatic circulating water: 25°C). Here, VISCOMATE VM-150III was used to adjust temperature of the circulating water.

### <Example 1A> (Reference Example)

### -Synthesis Example of active energy ray polymerizable compound 1-

Isobutylene oxide (product of Tokyo Chemical Industry Co., Ltd.) (12.98 g, 180 mmol) was dissolved in dehydrated acetonitrile (140 mL), and tetrabutylammonium bromide (1.3 g, 4 mmol) was added thereto. Then, acrylic acid (10.8 g, 150 mmol) was gradually added to the solution at room temperature. The resultant solution was heated and was refluxed for 4.5 hours. The reaction mixture was filtrated to obtain a filtrate (colorless solution). The filtrate was concentrated under reduced pressure to obtain a concentrated product. Then, 5% by mass sodium carbonate solution (80 mL) was added to the obtained concentrated product, and then the resultant solution was extracted with dichloromethane. The dichloromethane solution was dried with sodium sulfate, and was concentrated under reduced pressure, to obtain a colorless oily product. Moreover, a column was loaded with 350 g of Wakogel C300 (product of Wako Pure Chemical Industries, Ltd.), and the oily product was purified by column chromatography using hexane and ethyl acetate as an eluent, to obtain a colorless oily product of active energy ray polymerizable compound 1 represented by the following Structural Formula (1) (2.3 g, yield: about 11%).

### [Active Energy Ray Polymerizable Compound 1]

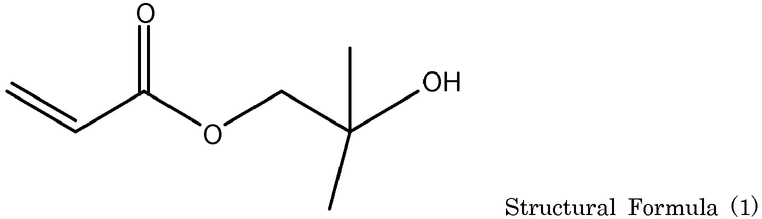

Identification data of the active energy ray polymerizable compound 1 were as follows.
¹H-NMR(CDCl₃):δ1.28(s,6H),1.61(bs,1H),4.06(s,2H),5.89(dd,1H),6.16-6.21(m,1H),6. 46(dd,1H)
IR(NaCl):3442,2979,1727,1634,1618,1471,1409,1383,1367,1298,1201,1066,1010,98 5,924,811,774,667cm⁻¹

### <Example 2A> (Reference Example)

### -Synthesis Example of Active Energy Ray Polymerizable Compound 2-

In a flask, 3-methyl-1,3-butanediol (product of Tokyo Chemical Industry Co., Ltd.) (12.5 g, 120 mmol) was added to dehydrated dichloromethane (130 mL), and the flask was purged with an argon gas, followed by adding trimethylamine (14.6 g, 144 mmol). The flask was cooled to about -10°C, and then acryloyl chloride (13.0 g, 144 mmol) was gradually added thereto so that a system temperature was -10°C to -5°C. Then the resultant mixture was stirred for 2 hours at room temperature. Moreover, the precipitated product was removed through filtration to obtain a filtrate, and the filtrate was washed with water, a saturated sodium hydrogen carbonate solution, and a saturated sodium chloride solution. Next, the resultant product was dried with sodium sulfate, and was concentrated under reduced pressure, to obtain a brown oily product. Moreover, a column was loaded with 350 g of Wakogel C300 (product of Wako Pure Chemical Industries, Ltd.), and then the brown oily product was purified by column chromatography using hexane and ethyl acetate as an eluent, to obtain a colorless oily product of active energy ray polymerizable compound 2 represented by the following Structural Formula (2) (7.7 g, yield: about 41%).

### [Active Energy Ray Polymerizable Compound 2]

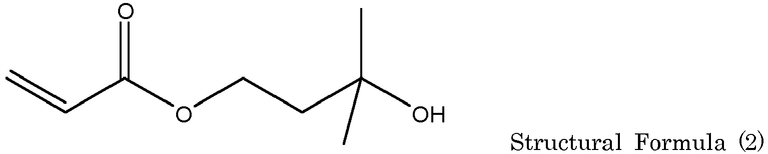

Identification data of the active energy ray polymerizable compound 2 were as follows.
¹H-NMR(CDCl₃):δ1.28(s,6H),1.67(bs,1H),1.89(t,2H),4.34(t,2H),5.84(dd,1H),6.09-6.1 5(m,1H),6.40(dd,1H)
IR(NaCl):3441,2973,2936,1725,1636,1619,1470,1410,1380,1298,1198,1056,984,940 ,877,812,667cm⁻¹

### <Example 3A> (Reference Example)

### -Synthesis Example of Active Energy Ray Polymerizable Compound 3-

In a flask, 2-methylpentane-2,4-diol(product of Tokyo Chemical Industry Co., Ltd.) (14.2 g, 120 mmol) was added to dehydrated dichloromethane (130 mL), and the flask was purged with an argon gas, followed by adding trimethylamine (14.6 g, 144 mmol). The flask was cooled to about -10°C, and then acryloyl chloride (13.0 g, 144 mmol) was gradually added thereto so that a system temperature was -10°C to -5°C. Then the resultant mixture was stirred for 2 hours at room temperature. Moreover, the precipitated product was removed through filtration, and the thus-obtained solution was concentrated under reduced pressure. Ethyl acetate (150 mL) was added to this concentrated product, and the resultant mixture was stirred to obtain a precipitated solid. The precipitated solid was removed through filtration to obtain a filtrate. The filtrate was concentrated under reduced pressure to obtain a yellow solution. Moreover, a column was loaded with 350 g of Wakogel C300 (product of Wako Pure Chemical Industries, Ltd.), and the yellow solution was purified by column chromatography using hexane and ethyl acetate as an eluent, to obtain a colorless oily product of active energy ray polymerizable compound 3 represented by the following Structural Formula (3) (8.0 g, yield: about 39%).

### [Active Energy Ray Polymerizable Compound 3]

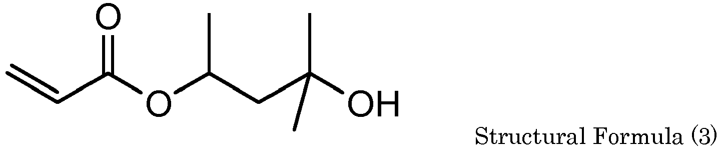

Identification data of the active energy ray polymerizable compound 3 were as follows. Incidentally, the spectrum analysis of the active energy ray polymerizable compound 3 was necessary.
¹H-NMR(CDCl₃):δ1.23(s,3H),1.24(s,3H),1.31(d,3H),1.69(dd,1H),1.94(dd,1H),2.05(bs ,1H),5.21-5.28(b,1H),5.83(dd,1H),6.07-6.14(m,1H),6.40(dd,1H)
IR(NaCl):3444,2975,2936,1721,1638,1619,1461,1407,1378,1299,1204,1128,1089,10 49,984,946,897,812,767,675cm⁻¹

### <Example 4A> (Reference Example)

### -Synthesis Example of Active Energy Ray Polymerizable Compound 4-

In a flask, 2-methylpentane-2,4-diol (product of Tokyo Chemical Industry Co., Ltd.) (8.3 g, 70 mmol) was added to dehydrated dichloromethane (100 mL), and the flask was purged with an argon gas, followed by adding triethylamine (8.5 g, 84 mmol). The flask was cooled to about -10°C, methacryloyl chloride (8.8 g, 84 mmol) was gradually added thereto so that a system temperature was -10°C to -5°C. Then the resultant mixture was stirred for 2 hours at room temperature. Moreover, the precipitated product was removed through filtration, and the thus-obtained solution was concentrated under reduced pressure. Ethyl acetate (150 mL) was added to this concentrated product, and the resultant mixture was stirred to obtain a precipitated solid. The precipitated solid was removed through filtration to obtain a filtrate. Then, the filtrate was concentrated under reduced pressure, to obtain a brown solution. Moreover, a column was loaded with 350 g of Wakogel C300 (product of Wako Pure Chemical Industries, Ltd.), and the brown solution was purified by column chromatography using hexane and ethyl acetate as an eluent, to obtain a colorless oily product of active energy ray polymerizable compound 4 represented by the following Structural Formula (4) (8.1 g, yield: about 62%).

### [Active Energy Ray Polymerizable Compound 4]

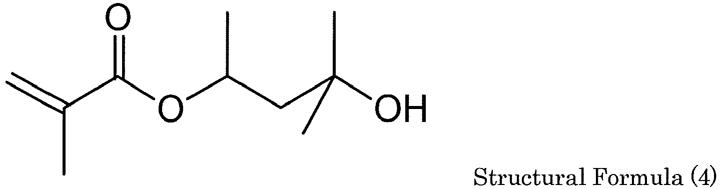

Identification data of the active energy ray polymerizable compound 4 were as follows. Incidentally, the spectrum analysis of the active energy ray polymerizable compound 4 was necessary.
¹H-NMR(CDCl₃):δ1.23(s,3H),1.24(s,3H),1.30(d,3H),1.69(dd,1H),1.93(dd,3H),1.94(dd, 1H),2.06(bs,1H),5.18-5.26(m,1H),5.55-5.58(m,1H),6.08-6.10(m,1H)
IR(NaCl):3424,2976,2933,1715,1635,1453,1402,1378,1321,1300,1174,1127,1089,10 43,1009,942,900,858,816,767,653cm⁻¹

### <Example 5A>

### -Synthesis Example of Active Energy Ray Polymerizable Compound 5-

In a flask, 3-methyl pentane-1,3,5-triol (product of Tokyo Chemical Industry Co., Ltd.) (6.7 g, 50 mmol) was added to dehydrated dichloromethane (100 mL), and the flask was purged with an argon gas, followed by adding trimethylamine (12.1 g, 120 mmol). Next, the flask was cooled to about -10°C, and methacryloyl chloride (10.5 g, 100 mmol) was gradually added thereto so that a system temperature was -10°C to -5°C. Then the resultant mixture was stirred for 2 hours at room temperature. Moreover, the precipitated product was removed through filtration, and the thus-obtained filtrate was washed with water, a saturated sodium hydrogen carbonate solution, and a saturated sodium chloride solution. Next, the resultant product was dried with sodium sulfate, and was concentrated under reduced pressure, to obtain a brown oily product. Moreover, a column was loaded with 350 g of Wakogel C300 (product of Wako Pure Chemical Industries, Ltd.), and then the brown oily product was purified by column chromatography using hexane and ethyl acetate as an eluent, to obtain a pale yellow oily product of active energy ray polymerizable compound 5 represented by the following Structural Formula (5) (8.9 g, yield: about 66%).

### [Active Energy Ray Polymerizable Compound 5]

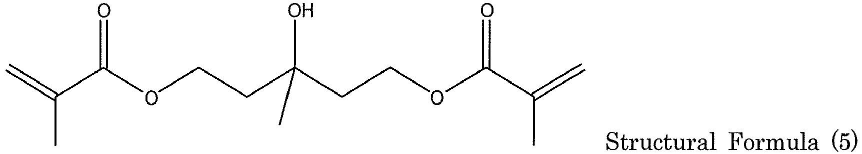

Identification data of the active energy ray polymerizable compound 5 were as follows.
¹H-NMR(CDCl₃):δ1.30(s,3H),1.91-1.95(s+t,6H+4H),2.15(br,1H),4.34(t,4H),5.55-5.59 (m,2H),6.07-6.10(m,2H)
IR(NaCl):3504,2972,1717,1637,1453,1376,1325,1298,1163,1013,943,815cm⁻¹

### <Example 6A>

### -Synthesis Example of Active Energy Ray Polymerizable Compound 6-

In a flask, 3-methyl pentane-1,3,5-triol (product of Tokyo Chemical Industry Co., Ltd.) (13.4 g, 100 mmol) was added to dehydrated dichloromethane (100 mL), and the flask was purged with an argon gas, followed by adding trimethylamine (24.3 g, 240 mmol). The flask was cooled to about -10°C, and then acryloyl chloride (21.7 g, 240 mmol) was gradually added thereto so that a system temperature was -10°C to -5°C. Then the resultant mixture was stirred for 2 hours at room temperature. Moreover, the precipitated product was removed through filtration, and the thus-obtained filtrate was washed with water, a saturated sodium hydrogen carbonate solution, and a saturated sodium chloride solution. Next, the resultant product was dried with sodium sulfate, and was concentrated under reduced pressure, to obtain a brown oily product. Moreover, a column was loaded with 350 g of Wakogel C300 (product of Wako Pure Chemical Industries, Ltd.), and then the brown oily product was purified by column chromatography using hexane and ethyl acetate as an eluent, to obtain a colorless oily product of active energy ray polymerizable compound 6 represented by the following Structural Formula (6) (4.1 g, yield: about 17%).

### [Active Energy Ray Polymerizable Compound 6]

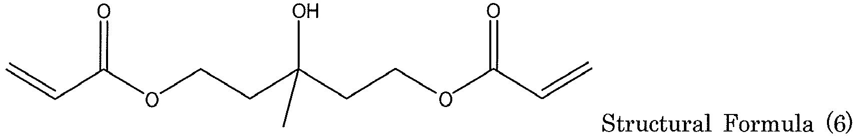

Identification data of the active energy ray polymerizable compound 6 were as follows.
¹H-NMR(CDCl₃):δ1.30(s,3H),1.88-1.98(m,5H),4.36(t,4H),5.84(dd,2H),6.08-6.15(m,2 H),6.40(dd,2H)
IR(NaCl):3491,2972,1724,1636,1619,1463,1410,1298,1277,1199,1057,984,812cm⁻¹

### <Comparative Example 1A>

A commercially available product of 1,6-hexanediol dimethacrylate (product of Tokyo Chemical Industry Co., Ltd.) represented by the following Structural Formula (7) was used for a compound of Comparative Example 1A.

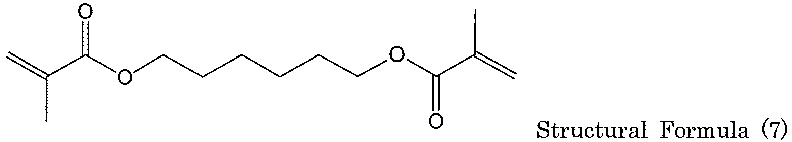

### <Comparative Example 2A>

A commercially available product of 1,3-butanediol dimethacrylate (product of Tokyo Chemical Industry Co., Ltd.) represented by the following Structural Formula (8) was used for a compound of Comparative Example 2A.

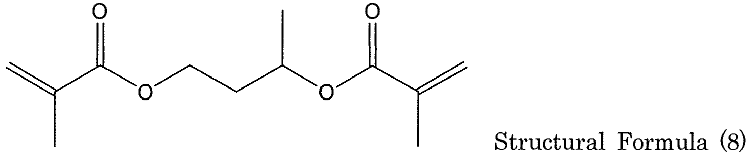

### <Comparative Example 3A>

A commercially available product of neopentyl glycol dimethacrylate (product of Tokyo Chemical Industry Co., Ltd.) represented by the following Structural Formula (9) was used for a compound of Comparative Example 3A.

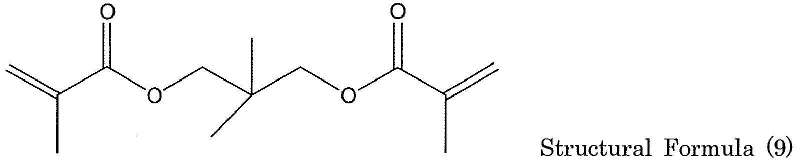

### <Comparative Example 4A>

A commercially available product of glycerol dimethacrylate (product of Tokyo Chemical Industry Co., Ltd.) represented by the following Structural Formula (10) was used for a compound of Comparative Example 4A.

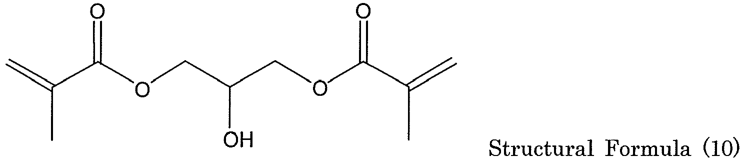

### <Comparative Example 5A>

A commercially available product of hydroxyethyl acrylate (product of Tokyo Chemical Industry Co., Ltd.) represented by the following Structural Formula (11) was used for a compound of Comparative Example 5A.

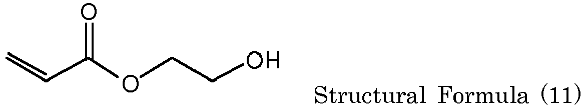

### <Comparative Example 6A>

A commercially available product of hydroxyethyl methacrylate (product of Tokyo Chemical Industry Co., Ltd.) represented by the following Structural Formula (12) was used for a compound of Comparative Example 6A.

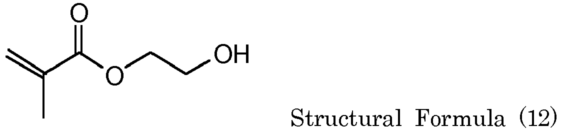

Each of the compounds of Reference Examples 1A to 4A, Examples of 5A and 6A and Comparative Examples 1A to 6A was evaluated for viscosity and absence of odor as follows. Results are given in Table 1.

### <Measurement of viscosity>

A cone plate rotary viscometer, VISCOMETER TVE-22L (product of Toki Sangyo Co., Ltd) was used to measure viscosity of each of the compounds (Reference Examples 1A to 4A, Examples 5A and 6A and Comparative Examples 1A to 6A) with a cone rotor (1°34' × R24) under the following conditions (number of rotations: 50 rpm, temperature of thermostatic circulating water: 25°C). Here, VISCOMATE VM-150III was used to adjust temperature of the circulating water.

### <Absence of odor>

Each of the compounds of the Reference Examples 1A to 4A, Examples 5A and 6A and the Comparative Example 1A to 6A was evaluated for "absence of odor" by the following procedures (1) to (3). Evaluation criteria were as follows.
(1) About 100 mg (about 0.1 g) of each of the compounds was weighed in a sample bottle (glass bottle) (50 cc) and a cap of the sample bottle was closed.
(2) The sample bottle was left to stand for about 30 minutes at room temperature.
(3) Odor given off upon opening the cap of the sample bottle (glass bottle) was smelled by putting the nose close to the sample bottle.

### -Evaluation criteria-

A: There was no perceivable odor, or there was no perceivable, uncomfortable odor.
B: Peculiar odor caused uncomfortable feeling.
C: Peculiar odor caused strong uncomfortable feeling.

**Table 1**

| | | Active energy ray polymerizable compounds | Viscosity (25°C, mPa·s) | Odor |
|---|---|---|---|---|
| Reference Examples | 1A | 1 | 11.7 | A |
| | 2A | 2 | 10.8 | A |
| | 3A | 3 | 10.5 | A |
| | 4A | 4 | 15.2 | A |
| Examples | 5A | 5 | 69.0 | A |
| | 6A | 6 | 46.5 | A |
| Comparative Examples | 1A | 1,6-Hexanediol dimethacrylate | 12.0 | C |
| | 2A | 1,3-Butanediol dimethacrylate | 6.0 | C |
| | 3A | Neopentyl glycol dimethacrylate | 12.0 | C |
| | 4A | Glycerol dimethacrylate | 34.5 | A |
| | 5A | Hydroxyethyl acrylate | 5.1 | A |
| | 6A | Hydroxyethyl methacrylate | 5.0 | A |

As given in the results of the Table 1, it is found that the active energy ray polymerizable compounds of Reference Examples 1A to 4A and Examples 5A and 6A have a little odor.

### <Example 1B> (Reference Example)

### -Preparation Example of Active-energy-ray-curable composition-

The active energy ray polymerizable compound 1 of Reference Example 1A (950 mg), and a polymerization initiator (product name: IRGACURE 907, component: 2-methyl-1-[4-(methylthio)phenyl]-2-morpholinopropane-1-one, product of BASF Japan Ltd.) (50 mg) were mixed using a magnetic stirrer, to prepare active-energy-ray-curable composition 1 of Example 1B.

### <Reference Examples 2B to 4B, Examples 5B and 6B and Comparative Examples 1B to 6B>

Active-energy-ray-curable compositions 2 to 12 of Reference Examples 2B to 4B, Examples 5B and 6B and Comparative Examples 1B to 6B were prepared in the same manner as in Example 1B except that the active energy ray polymerizable compound 1 was changed to each of the active energy ray polymerizable compounds described in Table 2.

Each of the active-energy-ray-curable compositions 1 to 12 of the above Reference Examples 1B to 4B, Examples 5B and 6B and Comparative Examples 1B to 6B were evaluated for active energy ray polymerizing ability and active energy ray curing ability as follows. Results are given in Table 2.

### <Active Energy Ray Polymerizing Ability>

A differential scanning calorimeter (product name: DSC-7020, product of Seiko Instruments Inc.) and an ultraviolet-ray irradiating apparatus (PDC-7) were used to evaluate active energy ray polymerizing ability of each of the active-energy-ray-curable compositions.

Specifically, one sample was measured twice for an amount of heat generated in the case where the active energy ray polymerizable compound was irradiated with ultraviolet rays having a wavelength of 365 nm at 200 mW/cm² for a sufficient time to terminate polymerization of the active energy ray polymerizable compound The amount of heat generated in the first measurement includes not only an amount of heat generated through polymerization of the active energy ray polymerizable compound but also an amount of heat generated through ultraviolet irradiation. Therefore, the sample that had completed polymerization in the first measurement was irradiated again with ultraviolet rays under the same conditions described above, to measure the amount of heat generated other than the amount of heat generated through polymerization of the active energy ray polymerizable compound. Then, the amount of heat generated through polymerization of the active energy ray polymerizable compound was calculated by a difference between the amount of heat generated in the first measurement and the amount of heat generated in the second measurement. Here, time for attaining a maximum amount of heat generated from the start of ultraviolet rays irradiation is referred to as "T₁ [s]", which was used as an indicator to compare speeds of active energy ray polymerization.

### <Active Energy Ray Curing Ability>

A viscoelasticity measuring apparatus (product name: MCR302, product of Anton-Parr) with an UV curing measuring cell as an option and a LED light source (product name: LIGHTNINGCURE LC-L1, product of Hamamatsu Photonics K. K.) were used to measure active energy ray curing ability of each of the active-energy-ray-curable composition.

Specifically, using a cone plate having a diameter of 20 mm, a sample (thickness of 10 µm) was put into a gap of 10 µm, and then was irradiate with ultraviolet rays having a wavelength of 365 nm at 50 mW/cm². Then, change of viscoelasticity was measured until elastic modulus of the sample was saturated. A maximum value of the elastic modulus was determined based on the measurement results, which was used for an indicator of the curing level.

Generally, the elastic modulus of the active-energy-ray-curable compositions is 1×10⁴ Pa, which is regard to as enough level to be cured. In the present disclosure, however, the elastic moduli of the active-energy-ray-curable compositions of Reference Examples, Examples and Comparative Examples were mostly 1×10⁵ Pa. This is because the elastic modulus thereof was saturated at 1×10⁵ Pa under the above conditions for curing ability by the active energy rays, and thus was impossible to measure any more. This indicates that all of the samples saturated at 1×10⁵ Pa could form a hard state though a sufficient amount of irradiation with active energy rays (imparting much active energy ray energy to the active-energy-ray-curable composition). However, the sample capable of being saturated at elastic modulus of 1×10⁵ Pa through short-time optical irradiation can be cured with low energy, and is excellent in active energy ray curing ability.

Moreover, energy of ultraviolet rays (that is, curing energy) irradiated until the elastic modulus is saturated is calculated by multiplying intensity of ultraviolet rays (50 mW/cm²) by time [s] for irradiating the ultraviolet rays.

**Table 2**

| | | Active energy ray polymerizable compounds | Active energy ray polymerizing ability | Active energy ray curing ability | |
|---|---|---|---|---|---|
| | | | T₁ (seconds) | Elastic modulus (Pa) | Curing energy (mJ/cm²) |
| Reference Examples | 1B | 1 | 3.6 | 1.0 × 10⁵ | 370 |
| | 2B | 2 | 3.0 | 1.0 × 10⁵ | 330 |
| | 3B | 3 | 5.4 | 1.0 × 10⁵ | 580 |
| | 4B | 4 | 22.8 | 1.0 × 10⁵ | 1,405 |
| Examples | 5B | 5 | 4.8 | 1.0 × 10⁵ | 121 |
| | 6B | 6 | 3.0 | 1.0 × 10⁵ | 107 |
| Comparative Examples | 1B | 1,6-Hexanediol dimethacrylate | 6.0 | 1.0 × 10⁵ | 531 |
| | 2B | 1,3-Butanediol dimethacrylate | 6.0 | 1.0 × 10⁵ | 555 |
| | 3B | Neopentyl glycol dimethacrylate | 7.8 | 1.0 × 10⁵ | 391 |
| | 4B | Glycerol methacrylate | 4.5 | 1.0 × 10⁵ | 230 |
| | 5B | Hydroxyethyl acrylate | 5.7 | 4.5 × 10⁴ | 470 |
| | 6B | Hydroxyethyl methacrylate | 34.8 | 7.0 × 10⁴ | 2,501 |

From the results in Table 2, it is found that the active-energy-ray-curable compositions of Reference Examples 1B to 4B and Examples 5B and 6B containing the active energy ray polymerizable compounds of Reference Examples 1A to 4A and Examples 5A and 6A are excellent in active energy ray polymerizing ability and active energy ray curing ability. Specifically, compared to the active-energy-ray-curable compositions of Comparative Examples 1B to 4B, the active-energy-ray-curable compositions of Examples 5B to 6B containing a plurality of (meth)acrylic groups (two (meth)acrylic groups) in a molecular thereof have low T₁ and low curing energy, where the T₁ is an indicator of the active energy ray polymerizing ability, and the curing energy is an indicator of curing ability. It is believed that the above is caused due to the tertiary hydroxyl group in the active energy ray polymerizable compounds of Examples 5A and 6A.

Moreover, it is found that the active-energy-ray-curable compositions of Reference Examples 1B to 4B containing only one (meth)acrylic group in a molecular thereof are excellent in active energy ray polymerizing ability and active energy ray curing ability, compared to the active-energy-ray-curable compositions of Comparative Examples 5B and 6B. Specifically, comparing the acrylate-containing active-energy-ray-curable compositions of Reference Examples 1B, 2B and 3B, and Example 6B with the active-energy-ray-curable composition of Comparative Example 5B, it is found that the active-energy-ray-curable compositions of Reference Examples 1B, 2B and 3B, and Example 6B are more excellent in active energy ray polymerizing ability. The active-energy-ray-curable compositions of Reference Examples 1B and 2B have low curing energy, and thus are excellent in active energy ray curing ability. Also, the active-energy-ray-curable compositions of Reference Example 3B is not inferior to the active-energy-ray-curable compositions of Comparative Example 5B. Comparing Reference Examples 1B and 2B with Reference Example 3B, it is found that the active-energy-ray-curable composition is excellent in active energy ray curing ability in cases where the hydrocarbon structure adjacent to (meth)acrylic acid ester is the methylene structure (-CH₂-).

Meanwhile, comparing the methacrylate-containing active-energy-ray-curable composition of Reference Example 4B with the active-energy-ray-curable composition of Comparative Example 6B, it is found that the methacrylate-containing active-energy-ray-curable composition of Reference Example 4B is excellent in both active energy ray polymerizing ability and active energy ray curing ability. Therefore, it is found that the active energy ray polymerizable compound containing a tertiary hydroxyl group in a molecular thereof is more excellent than the active energy ray polymerizable compound containing primary hydroxyl group in a molecular thereof.

### <Example 1C> (Reference Example)

### -Preparation Example of Active-energy-ray-curable ink-

The active energy ray polymerizable compound 1 obtained in Reference Example 1A (100 parts), a polymerization initiator (product name: IRGACURE 907, product of BASF Japan Ltd.) (10 parts), and carbon black (product name: MICROLITH Black C-K, product of BASF Japan Ltd.) (3 parts) were mixed to obtain ink of Reference Example 1C.

### <Reference Examples 2C to 4C, and 5C and 6C>

Active-energy-ray-curable inks of Reference Examples 2C to 4C and Examples 5C and 6C were obtained in the same manner as in Reference Example 1C except that the active energy ray polymerizable compound 1 obtained in Reference Example 1A was changed to the active energy ray polymerizable compounds 2 to 6 obtained in Reference Examples 2C to 4C and Examples 5C and 6C.

### <Reference Examples 1D to 4D and Examples 5D and 6D>

Active-energy-ray-curable inks of Reference Examples 1D to 4D and Examples 5D and 6D were obtained in the same manner as in Reference Examples 1C to 4C and Examples 5C and 6C except that the carbon black (product name: MICROLITH Black C-K, product of BASF JAPAN LTD.) was changed to a blue pigment (product name: MICROLITH Blue 4G-K, product of BASF JAPAN LTD.).

### -Evaluation of Curing Ability of Ink 1-

An inkjet recording apparatus (product of RICOH Company, Ltd., head: GEN4, product of Ricoh Printing Systems, Ltd.) was used to eject each of the active-energy-ray-curable inks of Reference Examples of 1C to 4C and Examples 5C and 6C and Reference Examples 1D to 4D and Examples 5D and 6D on a glass slide. Then, an UV irradiating device (product name: LH6, product of Fusion Systems Japan) was used to irradiate each of the active-energy-ray-curable inks with ultraviolet rays having a wave length of 365 nm at 200 mW/cm² to be cured.

As a result, each of the active-energy-ray-curable inks could be ejected without causing problems, and the resultant ink images were adequately cured.

Each of the active-energy-ray-curable inks substantially correspond to the product containing each of the active-energy-ray-curable compositions of Reference Examples 1B to 4B and Examples 5B and 6B. When active energy ray polymerizing ability and active energy ray curing ability of each of the active-energy-ray-curable inks were measured in the same manner as in measurements of the active-energy-ray-curable compositions, all of the active-energy-ray-curable inks were excellent in active energy ray polymerizing ability and active energy ray curing ability similar to the active-energy-ray-curable compositions of Reference Examples 1B to 4B and Examples 5B and 6B.

### - Evaluation of Curing Ability of Ink 2-

A nib of a pen was immersed in each of inks of Reference Examples 1C to 4C and Examples 5C and 6C and Reference Examples 1D to 4D and Examples 5D and 6D, followed by writing characters on a PET film and plain paper. Then, an UV irradiating device (product name: LH6, product of Fusion Systems Japan) was used to irradiate the PET film and the plain paper with ultraviolet rays having a wavelength of 365 nm at 200 mW/cm², to be cured. As a result, each of the active-energy-ray-curable ink images was adequately cured.

## Claims

1. An active-energy-ray-curable composition comprising
a (meth)acrylic acid ester compound containing a tertiary hydroxyl group in a molecule of the (meth)acrylic acid ester compound and represented by General Formula (1) below, 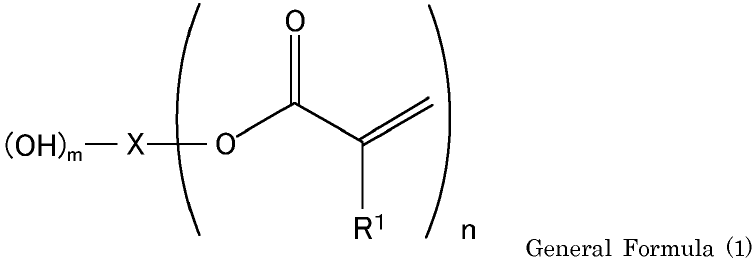 where in the General Formula (1), OH represents a tertiary hydroxyl group, m represents an integer of a range of from 1 through 2, n is 2, R¹ represents a hydrogen atom or a methyl group, and X represents a group formed of an aliphatic hydrocarbon containing from 4 through 10 carbon atoms or a group formed of an aliphatic cyclic hydrocarbon containing from 4 through 10 carbon atoms.

2. The active-energy-ray-curable composition according to claim 1, wherein the (meth)acrylic acid ester compound represented by the General Formula (1) comprises a compound represented by General Formula (6) below, 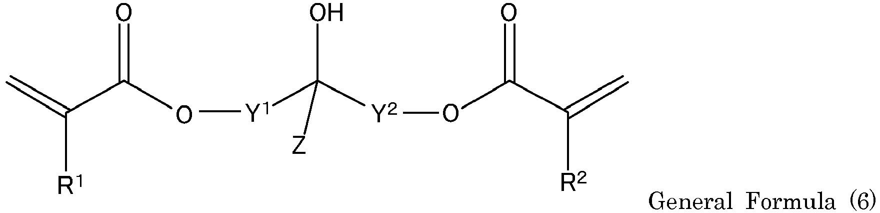 where in the General Formula (6), Y¹ and Y² each independently represent a substituted or unsubstituted alkylene group containing from 1 through 6 carbon atoms, Z represents an alkyl group containing from 1 through 3 carbon atoms, and R¹ and R² each independently represent a hydrogen atom or a methyl group.

3. The active-energy-ray-curable composition according to claim 2, wherein the compound represented by the General Formula (6) comprises a compound represented by General Formula (7) below, 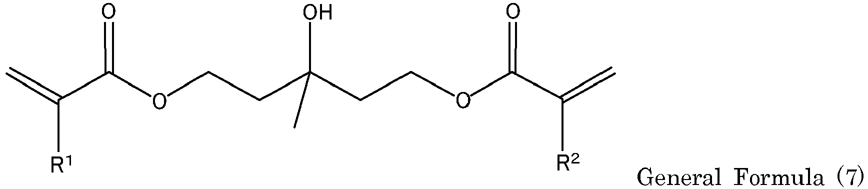 where in the General Formula (7), R¹ and R² each independently represent a hydrogen atom or a methyl group.

4. An active-energy-ray-curable ink comprising
the active-energy-ray-curable composition according to any one of claims 1 to 3.

5. The active-energy-ray-curable ink according to claim 4, wherein the active-energy-ray-curable ink is used for ink jet.

6. A composition stored container comprising:
a container; and
at least one selected from the group consisting of the active-energy-ray-curable composition according to any one of claims 1 to 3 and the active-energy-ray-curable ink according to claim 4 or 5 in the container.

7. A two-dimensional or three-dimensional image forming apparatus comprising:
a storing part containing a container and at least one selected from the group consisting of the active-energy-ray-curable composition according to any one of claims 1 to 3 and the active-energy-ray-curable ink according to claim 4 or 5 in the container; and
an irradiator configured to irradiate the active-energy-ray-curable composition or the active-energy-ray-curable ink with active energy rays.

8. A method for forming a two-dimensional or three-dimensional image, the method comprising
irradiating at least one selected from the group consisting of the active-energy-ray-curable composition according to any one of claims 1 to 3 and the active-energy-ray-curable ink according to claim 4 or 5 with active energy rays.

9. A cured material comprising
a material obtained by irradiating at least one selected from the group consisting of the active-energy-ray-curable composition according to any one of claims 1 to 3 and the active-energy-ray-curable ink according to claim 4 or 5 with active energy rays to be cured.

10. A decorative body comprising:
a base; and
the cured material according to claim 9 decorated on a surface of the base.

11. An active energy ray polymerizable compound comprising
a (meth)acrylic acid ester compound represented by General Formula (1) below, 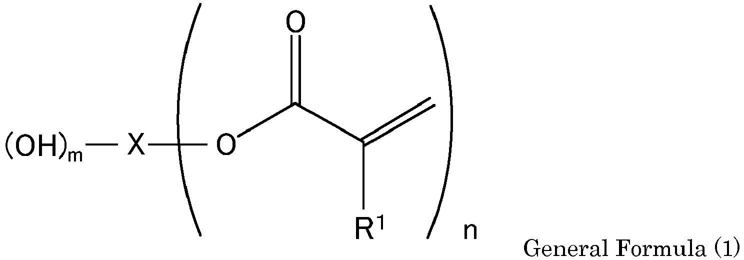 where in the General Formula (1), OH represents a tertiary hydroxyl group, m represents an integer of a range of from 1 through 2, n is 2, R¹ represents a hydrogen atom or a methyl group, and X represents a group formed of an aliphatic hydrocarbon containing from 4 through 10 carbon atoms or a group formed of an aliphatic cyclic hydrocarbon containing from 4 through 10 carbon atoms.

## Patentansprüche

1. Mit aktivem Energiestrahl härtbare Zusammensetzung, umfassend
eine (Meth)acrylsäureester-Verbindung, die eine tertiäre Hydroxyl-Gruppe in einem Molekül der (Meth)acrylsäureester-Verbindung enthält und dargestellt wird durch die nachfolgende Allgemeine Formel (1), 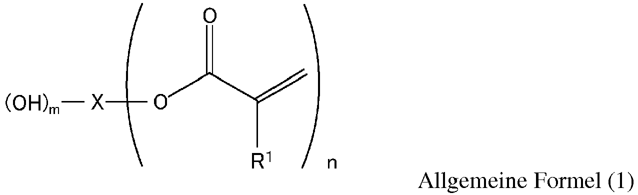 wobei in der Allgemeinen Formel (1) OH eine tertiäre Hydroxyl-Gruppe darstellt, m eine ganze Zahl im Bereich von 1 bis 2 darstellt, n 2 beträgt, R¹ ein Wasserstoffatom oder eine Methylgruppe darstellt und X eine Gruppe darstellt, die aus einem aliphatischen Kohlenwasserstoff gebildet wird, der 4 bis 10 Kohlenstoffatome enthält, oder aus einer Gruppe, die aus einem aliphatischen cyclischen Kohlenwasserstoff gebildet wird, der 4 bis 10 Kohlenstoffatome enthält.

2. Mit aktivem Energiestrahl härtbare Zusammensetzung nach Anspruch 1, wobei die durch die Allgemeine Formel (1) dargestellte (Meth)acrylsäureester-Verbindung eine Verbindung umfasst, die durch die nachfolgende Allgemeine Formel (6) dargestellt wird 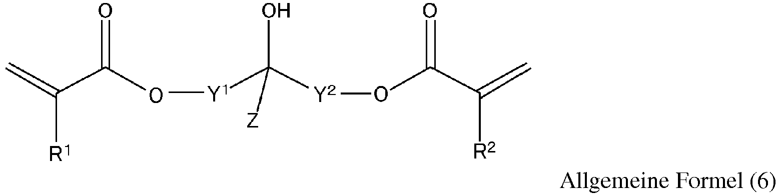 wobei in der Allgemeinen Formel (6) Y¹ und Y² jeweils unabhängig eine substituierte oder unsubstituierte Alkylen-Gruppe darstellen, die 1 bis 6 Kohlenstoffatome enthält, Z eine Alkyl-Gruppe darstellt, die 1 bis 3 Kohlenstoffatome enthält, und R¹ und R² jeweils unabhängig ein Wasserstoffatom oder eine Methyl-Gruppe darstellen.

3. Mit aktivem Energiestrahl härtbare Zusammensetzung nach Anspruch 2, wobei die durch die Allgemeine Formel (6) dargestellte Verbindung eine Verbindung darstellt, die durch die nachfolgende Allgemeine Formel (7) dargestellt wird, 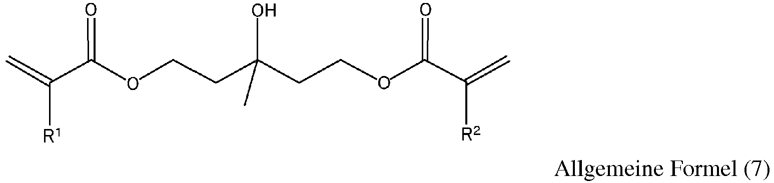 wobei in der Allgemeinen Formel (7) R¹ und R² jeweils unabhängig ein Wasserstoffatom oder eine Methyl-Gruppe darstellen.

4. Mit aktivem Energiestrahl härtbare Tinte, umfassend
die mit aktivem Energiestrahl härtbare Zusammensetzung nach einem der Ansprüche 1 bis 3.

5. Mit aktivem Energiestrahl härtbare Tinte nach Anspruch 4, wobei die mit aktivem Energiestrahl härtbare Tinte für einen Tintenstrahl verwendet wird.

6. In einem Behälter aufbewahrte Zusammensetzung, umfassend:
einen Behälter; und
mindestens eine, die ausgewählt ist aus der Gruppe bestehend aus der mit einem aktiven Energiestrahl härtbaren Zusammensetzung nach einem der Ansprüche 1 bis 3 und der mit einem aktiven Energiestrahl härtbaren Tinte nach Anspruch 4 oder 5 in dem Behälter.

7. Zweidimensionales oder dreidimensionales Bild erzeugende Vorrichtung, umfassend:
ein Teil zum Aufbewahren, das einen Behälter enthält und mindestens eine, die ausgewählt ist aus der Gruppe bestehend aus der mit einem aktiven Energiestrahl härtbaren Zusammensetzung nach einem der Ansprüche 1 bis 3 und der mit einem aktivem Energiestrahl härtbaren Tinte 4 oder 5 in dem Behälter; und
eine Bestrahlungsvorrichtung, die konfiguriert ist, um die mit aktivem Energiestrahl härtbare Zusammensetzung oder die mit aktivem Energiestrahl härtbare Tinte mit aktiven Energiestrahlen zu bestrahlen.

8. Verfahren zum Erzeugen eines zweidimensionalen oder dreidimensionalen Bildes, wobei das Verfahren umfasst:
das Bestrahlen von mindestens einer, die ausgewählt ist aus der Gruppe bestehend aus der mit einem aktiven Energiestrahl härtbaren Zusammensetzung nach einem der Ansprüche 1 bis 3 und der mit einem aktiven Energiestrahl härtbaren Tinte 4 oder 5, mit aktiven Energiestrahlen.

9. Gehärtetes Material, umfassend
ein Material, das erhalten wird durch Bestrahlen von mindestens einer, die ausgewählt ist aus der Gruppe bestehend aus der mit einem mit aktiven Energiestrahl härtbaren Zusammensetzung nach einem der Ansprüche 1 bis 3 und der mit einem aktiven Energiestrahl härtbaren Tinte nach Anspruch 4 oder 5, mit aktiven Energiestrahlen, das gehärtet werden soll.

10. Dekorativer Körper, umfassend:
ein Trägermaterial; und
das gehärtete Material nach Anspruch 9, das auf einer Oberfläche des Trägermaterials dekoriert ist.

11. Mit einem aktiven Energiestrahl polymerisierbare Verbindung, umfassend eine (Meth)acrylsäureester-Verbindung, die dargestellt wird durch die nachfolgende Allgemeine Formel (1), 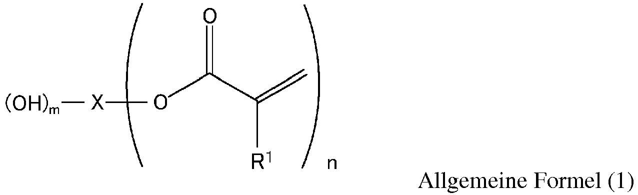 wobei in der Allgemeinen Formel (1) OH eine tertiäre Hydroxyl-Gruppe darstellt, m eine ganze Zahl im Bereich von 1 bis 2 darstellt, n 2 beträgt, R¹ ein Wasserstoffatom oder eine Methylgruppe darstellt und X eine Gruppe darstellt, die aus einem aliphatischen Kohlenwasserstoff gebildet wird, der 4 bis 10 Kohlenstoffatomen enthält, oder aus einer Gruppe, die aus einem aliphatischen cyclischen Kohlenwasserstoff gebildet wird, der 4 bis 10 Kohlenstoffatome enthält.

## Revendications

1. Composition durcissable sous rayonnement énergétique actif comprenant
un composé d'ester d'acide (méth)acrylique contenant un groupe hydroxyle tertiaire dans une molécule du composé d'ester d'acide (méth)acrylique et représenté par la Formule générale (1) ci-dessous, 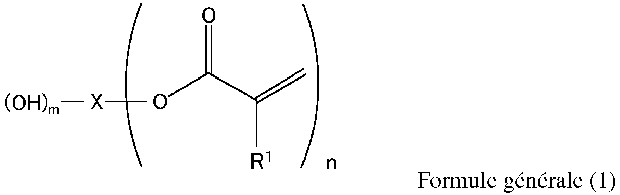 où dans la Formule générale (1), OH représente un groupe hydroxyle tertiaire, m représente un entier d'un intervalle allant de 1 à 2, n vaut 2, R¹ représente un atome d'hydrogène ou un groupe méthyle, et X représente un groupe formé d'un hydrocarbure aliphatique contenant de 4 à 10 atomes de carbone ou un groupe formé d'un hydrocarbure cyclique aliphatique contenant de 4 à 10 atomes de carbone.

2. Composition durcissable sous rayonnement énergétique actif selon la revendication 1, où le composé d'ester d'acide (méth)acrylique représenté par la Formule générale (1) comprend un composé représenté par la Formule générale (6) ci-dessous, 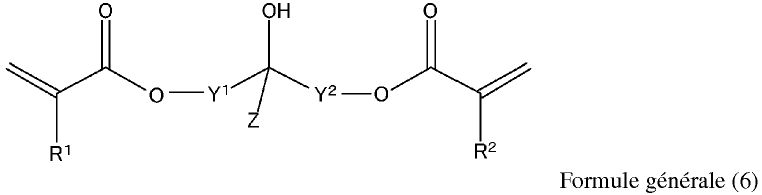 où dans la Formule générale (6), Y¹ et Y² représentent chacun indépendamment un groupe alkylène substitué ou non substitué contenant de 1 à 6 atomes de carbone, Z représente un groupe alkyle contenant de 1 à 3 atomes de carbone, et R¹ et R² représentent chacun indépendamment un atome d'hydrogène ou un groupe méthyle.

3. Composition durcissable sous rayonnement énergétique actif selon la revendication 2, où le composé représenté par la Formule générale (6) comprend un composé représenté par la Formule générale (7) ci-dessous, 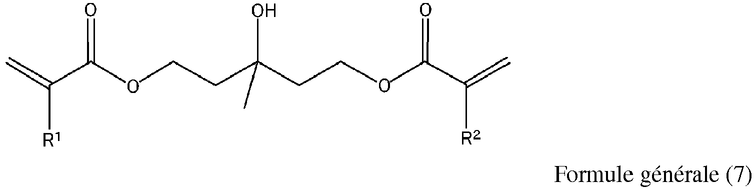 où dans la Formule générale (7), R¹ et R² représentent chacun indépendamment un atome d'hydrogène ou un groupe méthyle.

4. Encre durcissable sous rayonnement énergétique actif, comprenant
la composition durcissable sous rayonnement énergétique actif selon l'une quelconque des revendications 1 à 3.

5. Encre durcissable sous rayonnement énergétique actif selon la revendication 4, laquelle encre durcissable sous rayonnement énergétique actif est utilisée pour le jet d'encre.

6. Récipient de composition stockée, comprenant:
un récipient; et
au moins un élément sélectionné dans le groupe constitué par la composition durcissable sous rayonnement énergétique actif selon l'une quelconque des revendications 1 à 3 et l'encre durcissable sous rayonnement énergétique actif selon la revendication 4 ou 5 dans le récipient.

7. Appareil de formation d'image bidimensionnelle ou tridimensionnelle comprenant:
un élément de stockage contenant un récipient et au moins un élément sélectionné dans le groupe constitué par la composition durcissable sous rayonnement énergétique actif selon l'une quelconque des revendications 1 à 3 et l'encre durcissable sous rayonnement énergétique actif selon la revendication 4 ou 5 dans le récipient; et
un agent d'irradiation conçu pour irradier la composition durcissable sous rayonnement énergétique actif ou l'encre durcissable sous rayonnement énergétique actif avec des rayonnements énergétiques actifs.

8. Procédé de formation d'une image bidimensionnelle ou tridimensionnelle, le procédé comprenant
l'irradiation d'au moins un élément sélectionné dans le groupe constitué par la composition durcissable sous rayonnement énergétique actif selon l'une quelconque des revendications 1 à 3 et l'encre durcissable sous rayonnement énergétique actif selon la revendication 4 ou 5 avec des rayonnements énergétiques actifs.

9. Matériau durci comprenant
un matériau obtenu par irradiation d'au moins un élément sélectionné dans le groupe constitué par la composition durcissable sous rayonnement énergétique actif selon l'une quelconque des revendications 1 à 3 et l'encre durcissable sous rayonnement énergétique actif selon la revendication 4 ou 5 avec des rayonnements énergétiques actifs à durcir.

10. Corps décoratif comprenant:
une base; et
le matériau durci selon la revendication 9 décoré sur une surface de la base.

11. Composé polymérisable sous rayonnement énergétique actif comprenant
un composé d'ester d'acide (méth)acrylique représenté par la Formule générale (1) ci-dessous, 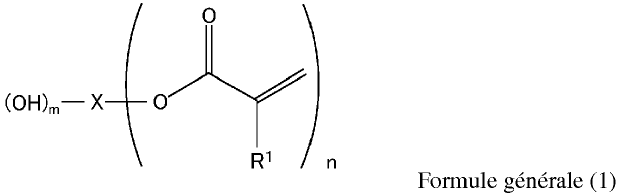 où dans la Formule générale (1), OH représente un groupe hydroxyle tertiaire, m représente un nombre entier d'un intervalle allant de 1 à 2, n vaut 2, R¹ représente un atome d'hydrogène ou un groupe méthyle, et X représente un groupe formé d'un hydrocarbure aliphatique contenant de 4 à 10 atomes de carbone ou un groupe formé d'un hydrocarbure cyclique aliphatique contenant de 4 à 10 atomes de carbone.
